# EUROPÄISCHE PATENTSCHRIFT

(11) **EP 3 981 715 B1**
(45) Veröffentlichungstag und Bekanntmachung des Hinweises auf die Patenterteilung: **23.04.2025**
(21) Anmeldenummer: 20200380.2
(22) Anmeldetag: 06.10.2020
(51) Int. Cl.: B65G 15/22, B65G 41/00

(54) **FÖRDERBANDSTRASSEN-AUFSTANDSBETONMODUL, SET VON FÖRDERBANDSTRASSEN-AUFSTANDSBETONMODULEN UND FÖRDERBANDSTRASSE**
CONVEYOR BELT SUPPORTING CONCRETE MODULE, SET OF CONVEYOR BELT SUPPORTING CONCRETE MODULES AND CONVEYOR BELT
MODULE DE BÉTON DE CONTACT POUR BANDES TRANSPORTEUSES, ENSEMBLE DE MODULES DE BÉTON DE CONTACT POUR BANDES TRANSPORTEUSES ET BANDE TRANSPORTEUSE

(43) Veröffentlichungstag der Anmeldung: 13.04.2022
(73) Patentinhaber: Heringhaus, Arnd, 34128 Kassel (DE)
(72) Erfinder: Heringhaus, Arnd, 34128 Kassel (DE)
(74) Vertreter: REHBERG HÜPPE + PARTNER

(56) Entgegenhaltungen:
- AU-A4- 2019 100 641
- CN-A- 111 071 693
- CN-A- 111 217 079
- DE-A1- 2 050 124
- ANONYMOUS: "Genormte Betonfertigteile", 12 August 2020 (2020-08-12), XP055789484, Retrieved from the Internet <URL:https://www.beweka.de/produkte/genormte-betonfertigteile/> [retrieved on 20210324]
- ANONYMOUS: "Lichtschächte - Jäger Beton", 26 September 2020 (2020-09-26), XP055789675, Retrieved from the Internet <URL:https://web.archive.org/web/20200926091155/https://www.jaeger-beton.de/portfolio-item/lichtschaechte/> [retrieved on 20210324]

## Beschreibung

### TECHNISCHES GEBIET DER ERFINDUNG

Die Erfindung betrifft Bauelemente für eine Förderbandstraße mit einem endlosen Fördermittel, welches einen Obertrum sowie einen Untertrum bildet. Die Förderbandstraße dient dem Transport eines beliebigen Förderguts, insbesondere eines Schüttguts. Um lediglich einige, die Erfindung nicht beschränkende Beispiele zu nennen, kann es sich bei dem Schüttgut um Naturbausteine, Kies, Sand, Kalkstein, Grauwacke, pulver- oder granulatförmiges Schüttgut, als Baumaterial ausgebildetes Schüttgut, Zement oder Beton handeln. Bei der Förderbandstraße dienen die von der Erfindung betroffenen Bauelemente dem Halten und Abstützen des Förderbands und weiterer Komponenten wie eines Antriebs, von Umlenkrollen oder Förderrollen (insbesondere gegenüber dem Boden).

### STAND DER TECHNIK

Bekannte Förderbandstraßen verfügen über beispielsweise von metallischen Streben gebildete Förderbandstreben, an denen Förderrollen und Umlenkrollen gehalten sind, die das Förderband führen und abstützen. Die Förderbandstreben sind durch aufwendige Konstruktionen, beispielsweise Stahlkonstruktionen abgestützt, die zum Teil fest in einem Fundament im Boden verankert werden. Traggestelle für Zugmittel von Bandförderern sind in vielfältigen unterschiedlichen Ausführungsformen in Druckschriften beschrieben, die in der IPC-Klasse B65G 021 einklassifiziert sind. Hingegen sind die Bandförderer selbst mit gegenläufig bewegten, in gleicher Ebene und parallel zueinander angeordneten Teilen der endlosen Förderfläche in der IPC-Klasse B65G 015/06 geführt.

AU 2019 100 641 A4 offenbart eine Förderbandstraße mit zwei parallelen Förderbandstreben, an denen Förderbandrollen gehalten sind. Die parallelen Förderbandstreben sind über eine Tragstruktur abgestützt, die aus metallischen Streben besteht. Diese Tragstruktur ist verschraubt mit balkenförmigen Betonschwellen. Die Betonschwellen verfügen über parallele horizontale Ausnehmungen, in welche Zinken eines Gabelstaplers eingefahren werden können, sodass eine Handhabung der Betonschwellen mittels des Gabelstaplers möglich ist. Die derart gebildete Förderbandstraße soll eine einfache Lagerung, einen einfachen Transport und auch einen sukzessiven Einsatz an unterschiedlichen Einsatzorten ermöglichen.

DE 2 050 124 A1 beschreibt eine Bandbrücke mit einem Jochbalken aus Stahlbeton, der über Pfähle in einer Gewässersohle abgestützt ist. Die Bandbrücke kann je nach Bedarf mit einer Vielzahl von Förderbändern ausgestattet sein, die quer zu dem Jochbalken verlaufen. Der Jochbalken mit den Pfählen bildet dabei einen Unterbau für die Förderbänder. DE 2 050 124 A1 schlägt vor, dass auf dem Unterbau und damit dem Jochbalken ein nach dem Baukastenprinzip montierbarer Trägerrost aus vorgefertigten Längsträgern und Querträgern angeordnet wird. Der Trägerrost weist dann Aufnahmen für Pfosten auf, die Tragkonstruktionen für weitere Förderbandetagen aufnehmen können oder eine Überdachung tragen können, die die gesamte Bandbrücke überspannt. Auf der Bandbrücke ist zusätzlich zu dem Trägerrost, den Förderbändern und den Förderbandetagen und Aufbauten wie Überdachungen eine Fahrbahnplatte einer Straßenbrücke angeordnet. Die Tragkonstruktion für die Förderbänder verfügt über die Längsträger, die aus Spannbeton hergestellt sind und parallel zueinander im Abstand voneinander auf dem Jochbalken verlegt sind, sowie die Querträger, die in Querrichtung eingehängt sind, der Versteifung dienen und ebenfalls aus Spannbeton hergestellt sind. Der derart aus den Längsträgern und Querträger gebildete Trägerrost ist mit Steckzementdielen eingedeckt, auf welchen die Traggerüste für die Bandförderer ruhen. In einer weiteren Ausbaustufe können über einer ersten Ebene mit Förderbänder mittels einer Rahmenkonstruktion weitere Förderbänder gehalten sein.
Aus
   Anonymous: "Genormte Betonfertigteile", 12 August 2020 (2020-08-12), XP055789484, Gefunden im Internet: URL: https://www.beweka.de/produkte/ genormte-betonfertigteile/ [gefunden am 2021-03-24]
sind genormte Betonfertigteile bekannt, bei denen es sich um Fundamente und Elemente bis zu 9 m Höhe, 60 t Gewicht, U-Teile und Tröge mit variablen Fugenausbildungen, Hauben, Bodenplatten, Abdeckplatten, Rahmendurchlässe, Sohlschalen, Kaskaden, Balken, Riegel, Hülsenfundamente, Winkelstützen, Frostschürzen, Sockelplatten, viereckige Kontrollschächte oder Gruben für Fahrzeuge oder Fahrzeugwagen handeln kann.
Aus
   Anonymous: "Lichtschäden - Jäger Beton", 26 September 2020 (2020-09-26), XP055789675, Gefunden im Internet: URL: https://web.archive.org/web/ 20200926091155/https://www.jaeger-beton.de/portfolio-item/lichtschaechte/ [gefunden am 2021-03-24]
sind Lichtschächte, Fenster-Zargen und Fenster-Einsätze bekannt, die zu einem Gesamtsystem vereinigt werden sollen. Die Lichtschächte werden zur Vermeidung von Wärmebrücken als separate Bauteile auf eine außenliegende Dämpfschicht montiert. Einteilige Kompaktlichtschächte können dabei aus Beton mit einer ebenmäßigen, glatten Sichtoberfläche hergestellt sein und können über einen Boden verfügen, der einen Bodenablauf aufweist. Anschraublichtschächte verfügen nicht über einen Boden und können bis zu einer Gesamthöhe von 200 cm aufgestockt werden. Einhängelichtschächte können in Konsolen von Betonzargen eingehängt werden, wobei die Lichtschächte als Betonfertigteile hergestellt sind. Die Anhängelichtschächte können eine Aufbauhöhe von bis zu 200 cm aufweisen und können eine Festigkeit derart aufweisen, dass diese begehbar sind und mit einem PKW befahrbar sind. Zu den Lichtschächten werden passende Aufsatzrahmen angeboten.

CN 111 217 079 A offenbart eine Endlade- und Sortiermaschine für pulverartige Partikel mineralischen Fördergutes, wie dieses beispielsweise in einer Miene auftritt. Die Entlade- und Sortiermaschine verfügt über einen in einem Ansaugtrichter angeordneten Propeller, über welchen die pulverförmigen Partikel angesaugt werden. Mittels eines dem Propeller vorgeordneten Siebes werden größere Partikel abgetrennt, die von dem Sieb über eine Rutsche einem Speicherbehälter für die größeren Partikel zugeführt werden. Die kleineren Partikel, die das Sieb passieren, gelangen über den Propeller in einen Speicherbehälter für diese kleineren Partikel. Mittel eines Infrarotsensors wird der Zeitpunkt erfasst, zu dem ein Speicherbehälter gefüllt ist. Mit dieser Erkennung werden Klappen der Speicherbehälter geöffnet, womit die größeren Partikeln einem ersten Fördergurt zugeführt werden und die kleineren Partikel einem zweiten Fördergurt zugeführt werden, womit die getrennte Abförderung der unterschiedlichen Partikel erfolgen kann. Die Entlade- und Sortiermaschine ist höhenverstellbar derart, dass der Saugtrichter mit dem darin angeordneten Propeller einschließlich der zugeordneten Speicherbehälter in unterschiedliche Höhen bewegt werden kann.

CN 111 071 693 A offenbart eine Förderbandstraße mit mehreren in Längsrichtung sowie Querrichtung angeordneten Förderbändern, die teilweise in unterschiedliche Richtungen antreibbar sind. Mittels dieser Förderbandstraße kann ein Fördergut, bei dem es sich um Baumaterialabfälle handelt, unterschiedlichen Sammelbehältern zugeführt werden.

### AUFGABE DER ERFINDUNG

Der vorliegenden Erfindung liegt die Aufgabe zugrunde, eine Förderbandstraße vorzuschlagen, welche insbesondere hinsichtlich
- des Aufbaus und des Abbaus,
- der Kosten,
- des Herstellungsaufwands für deren Bauteile und/oder
- der Möglichkeiten für die Gestaltung des Verlaufs der Förderbandstraße
verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt gemäß Anspruch 1 vor, dass das Halten, Abstützen und Lagern des Förderbands und weiterer Bauelemente der Förderbandstraße wie eines Antriebs (unmittelbar oder mittelbar) über ein Förderbandstraßen-Aufstandsbetonmodul erfolgt. Ein derartiges Förderbandstraßen-Aufstandsbetonmodul verfügt zumindest über einen Grundkörper aus Beton, wobei der Grundkörper auch Versteifungselemente, Verstärkungselemente, Spannelemente, Bewehrungen u. ä. aus einem anderen Material wie bspw. Metall aufweisen kann. Möglich ist beispielsweise, dass das Förderbandstraßen-Aufstandsbetonmodul eine in erster Näherung quaderförmige Außengeometrie aufweist. Möglich ist auch, dass das Förderbandstraßen-Aufstandsbetonmodul in der Art eines Betonblocksteins ausgebildet ist, die auch als Betonsteine im Lego-System bezeichnet werden. Ein so gebildetes Förderbandstraßen-Aufstandsbetonmodul kann dann für das Halten und Abstützen des Förderbands genutzt werden, ohne dass dies zwingend mit dem Boden oder einem anderen darunter angeordneten Bauelement oder Förderbandstraßen-Aufstandsbetonmodul durch zusätzliche Befestigungselemente, durch Verschrauben oder Verschweißen oder Eingießen verbunden werden muss. Vielmehr ist das Förderbandstraßen-Aufstandsbetonmodul als Aufstandselement ausgebildet, welches somit lediglich lose auf dem Boden oder einem darunter angeordneten anderen Bauelement oder Förderbandstraßen-Aufstandsbetonmodul angeordnet ist. Dies vereinfacht signifikant die Montage und Demontage, da das Förderbandstraßen-Aufstandsbetonmodul einfach entladen und auf dem geeignet vorbereiteten Boden oder dem darunter angeordneten Bauelement oder Förderbandstraßen-Aufstandsbetonmodul aufgestellt werden muss. In dem Aufstandsbereich kann das Förderbandstraßen-Aufstandsbetonmodul über Formschlusselemente mit dem Boden oder dem darunter angeordneten Bauelement angeordnet sein, wobei vorzugsweise ein bereits für Betonblocksteine oder ein Lego-System bekanntes oder erfindungsgemäß angepasstes Formschlusselement Einsatz finden kann.

Das erfindungsgemäß in einer Förderbandstraße eingesetzte Förderbandstraßen-Aufstandsbetonmodul ist als Modul ausgebildet, so dass zur Bildung einer Förderbandstraße mehrere gleiche oder unterschiedlich derartige Module Einsatz finden können.

Für eine erfindungsgemäße Variante verfügt das Förderbandstraßen-Aufstandsbetonmodul über einen Grundkörper, der H-förmig ausgebildet ist und einen, dem Querschenkel des H entsprechenden horizontalen Grundschenkel sowie zwei die Vertikalschenkel des H bildende, sich vertikal erstreckende Seitenschenkel aufweist.

Für eine andere erfindungsgemäße Variante ist der Grundkörper des Förderbandstraßen-Aufstandsbetonmoduls U-förmig ausgebildet mit einem horizontalen Grundschenkel und zwei sich vorzugsweise (zumindest ungefähr) vertikal von dem Grundschenkel nach oben erstreckenden Seitenschenkeln.

Möglich ist im Rahmen der Erfindung, dass das Förderbandstraßen-Aufstandsbetonmodul ausschließlich oder im Wesentlichen aus dem U-förmigen oder H-förmigen Grundkörper besteht. Möglich ist aber auch, dass der Grundkörper selbst oder Anbauteile desselben zusätzliche Komponenten aufweist, welche dann zu Abweichungen von der U-Form oder H-Form führen.

Für diese beiden Vorschläge können die Grundschenkel einerseits und die Seitenschenkel andererseits (alternativ oder kumulativ) für unterschiedliche Zwecke genutzt werden:
- Für ein erfindungsgemäßes Förderbandstraßen-Aufstandsbetonmodul bildet der Grundschenkel im Bereich seiner Unterseite eine Aufstandsfläche auf, mit welcher das Förderbandstraßen-Aufstandsbetonmodul auf dem Boden oder dem darunter angeordneten Bauelement aufstehen kann.
- Möglich ist, dass im Bereich des Grundschenkels, insbesondere im Bereich der Aufstandsfläche, mindestens ein Formschlusselement vorhanden ist, über welches der Grundschenkel und damit das Förderbandstraßen-Aufstandsbetonmodul formschlüssig in Wechselwirkung mit einem benachbarten Bauelement oder dem Boden in Wechselwirkung treten kann, womit beispielsweise der Verbund oder die Verbindung des Förderbandstraßen-Aufstandsbetonmoduls mit der Umgebung verbessert werden kann.
- Möglich ist auch, dass im Bereich des Grundschenkels zwei Ausnehmungen vorhanden sind. Die Ausnehmungen haben dabei einen Abstand voneinander und jeweils einen Querschnitt derart, dass in diese Ausnehmungen Zinken eines Gabelstaplers eingeführt werden können. Auf diese Weise kann eine Handhabung des Förderbandstraßen-Aufstandsbetonmoduls mittels eines Gabelstaplers ermöglicht werden. Die genannten Ausnehmungen können einen randgeschlossenen Querschnitt aufweisen, womit die Zinken des Gabelstaplers im Querschnitt vollständig von dem Material des Grundschenkels umgeben sind. Möglich ist aber auch, dass die Ausnehmungen einen randoffenen Querschnitt aufweisen. Steht in diesem Fall der Grundschenkel auf dem Boden oder einem benachbarten Bauelement auf, sind die Ausnehmungen nach unten durch das benachbarte Bauelement oder den Boden geschlossen. Dennoch können in die Ausnehmungen die Zinken des Gabelstaplers eingeführt werden, womit ein Anheben des Förderbandstraßen-Aufstandsbetonmoduls möglich ist. Die Ausnehmungen können einerseits genutzt werden, um das Förderbandstraßen-Aufstandsbetonmodul von einem Lkw oder einer Lagerstätte an den Bestimmungsort im Bereich einer Tragstütze für das Förderband zu bewegen. Möglich ist auch, dass über die Ausnehmungen für eine Demontage einer Förderbandstraße das Förderbandstraßen-Aufstandsbetonmodul von dem Boden oder dem darunter angeordneten Bauelement angehoben werden kann und wegtransportiert werden kann.
- Auch die Oberseite des Grundschenkels kann eine beliebige Geometrie und Konturierung aufweisen. Für einen Vorschlag der Erfindung weist die Oberseite (mindestens) eine Schrägfläche auf, die gegenüber der Horizontalen oder der Aufstandsfläche geneigt ist. Die Schrägfläche kann einerseits dazu dienen, einen von dem Grundschenkel und den Seitenschenkeln gebildeten Aufnahmeraum des Förderbandstraßen-Aufstandsbetonmoduls in Richtung der Schrägfläche zu vergrößern, womit die Anordnung eines weiteren Bauelements der Förderbandstraße, beispielsweise einer Umlenkrolle, in dem Aufnahmeraum verbessert werden kann. Andererseits kann die Schrägfläche dazu genutzt werden, um zu ermöglichen, dass von dem Förderband herunterfallendes Fördergut nicht im Bereich des Grundschenkels angehäuft wird, sondern dieses entlang der Schrägfläche abgeführt wird. Möglich ist aber auch, dass der Grundschenkel eine Oberseite mit zwei giebelartig in entgegengesetzte Richtungen gegenüber der Horizontalen geneigte Schrägflächen aufweist.
- Erfindungsgemäß weist der Grundschenkel und/oder weist ein Seitenschenkel (oder weisen beide Grundschenkel) einen Befestigungsbereich auf. Die Befestigungsbereiche an den beiden Seitenschenkeln sind erfindungsgemäß auf den einander zugewandten Innenseiten angeordnet. Möglich ist, dass an den Außenseiten Befestigungsbereiche für das Anlenken eines Hubmittels wie eines Hubgurts vorhanden sind. Um lediglich einige die Erfindung nicht beschränkende Beispiele zu nennen, kann in dem außenliegenden Befestigungsbereich eine Hublasche angebracht sein, an welcher eine Hubkette, ein Hubband o. ä. befestigt werden kann, mittels dessen dann ein Anheben des Förderbandstraßen-Aufstandsbetonmoduls möglich ist. Möglich ist aber auch, dass ein Hubzapfen in den Grundschenkel oder den Seitenschenkel eingegossen ist, an welchem dann ein Hubmittel angreifen kann. Erfindungsgemäß dient der Befestigungsbereich im Bereich der einander zugewandten Innenseiten der Befestigung einer sich parallel zum Förderband erstreckenden und die Förderrollen haltenden Förderbandstrebe. Kumulativ möglich ist, dass in dem Befestigungsbereich Halteelemente für Förderbandrollen, eine Umlenkrolle oder einen Antrieb für das Förderband befestigt sind. Um lediglich ein weiteres, die Erfindung nicht beschränkendes Beispiels zu nennen, kann der Befestigungsbereich der Befestigung einer Solaranlage dienen oder als Widerlager oder Gegengewicht für eine Solaranlage oder ein Solar-Paneel dienen, wozu vorzugsweise hierzu der Befestigungsbereich auf einer Außenseite des Seitenschenkels angeordnet ist.
- Alternativ oder kumulativ schlägt die Erfindung vor, dass der Grundschenkel und vorzugsweise beide Seitenschenkel einen Förderbandstreben-Auflagebereich aufweisen, auf dem eine Förderbandstrebe aufliegen kann und somit zumindest ein Teil der Stützkraft für die Förderbandstrebe und letzten Endes auch des Förderbandes mit dem darauf angeordneten Fördergut von einem möglichst großflächigen Förderbandstreben-Auflagebereich abgestützt werden kann.

Möglich ist, dass die vorgenannten Befestigungsbereiche von einem einzigen Befestigungsbereich des Förderbandstraßen-Aufstandsbetonmoduls bereitgestellt werden oder mehrere, räumlich voneinander getrennte oder ineinander übergehende Befestigungsbereiche hierfür vorgesehen sind.

Möglich ist, dass der Befestigungsbereich von dem Beton des Grundkörpers selbst bereitgestellt ist, so dass beispielsweise unmittelbar eine Verschraubung mit dem Beton des Grundkörpers erfolgt. Möglich ist auch, dass der Beton des Grundkörpers selber einen Förderbandstreben-Auflagebereich bereitstellt, in dem dann (unter Umständen auch großflächig) eine Abstützung einer Abstützlast erfolgen kann.

Für einen Vorschlag der Erfindung weist der Befestigungsbereich Befestigungselemente, Innengewindeeinsätze und/oder Außengewindeeinsätze auf, die in den Beton des Grundkörpers eingegossen sein können oder dübelartig in einer Bohrung oder Ausnehmung des Betons des Grundkörpers aufgenommen sein können. Hierbei sind die Befestigungselemente, Innengewindeeinsätze und/oder Außengewindeeinsätze spezifisch an die jeweils geforderte Befestigungsfunktion und die jeweils wirkenden Lasten angepasst. Durch das Eingießen in den Beton kann ein besonders guter Kraftfluss und damit eine dauerfeste Abstützung und Befestigung gewährleistet werden, indem eine auf das Befestigungselement, den Innengewindeeinsatz und/oder den Außengewindeeinsatz wirkende Kraft über eine große Übertragungsfläche in den Beton eingeleitet wird. Um lediglich einige die Erfindung nicht beschränkende Beispiele zu nennen, kann das Befestigungselement ein Befestigungszapfen oder Befestigungsflansch sein. Bei dem Innengewinde kann es sich um einen (bspw. hülsenartigen, unter Umständen auch die Übertragungsfläche vergrößernde Rippen aufweisenden) Einsatz handeln, der ein Innengewinde aufweist, in welches dann eine Befestigungsschraube eingeschraubt werden kann, über die dann weitere Bauelemente gehalten werden können. Der Außengewindeeinsatz kann beispielsweise eine eingegossene Gewindestange sein, wobei die Gewindestange auch Rippen, Absätze, tellerartige Verdickungen u. ä. aufweisen kann, um die Übertragungsfläche zwischen dem Außengewindeeinsatz und dem Beton zu vergrößern.

Für einen Vorschlag der Erfindung ermöglicht der Befestigungsbereich des Seitenschenkels eine Befestigung einer Förderbandstrebe unter einem Neigungswinkel gegenüber der Horizontalen oder gegenüber der Aufstandsfläche. Dies ist vorteilhaft dann, wenn sich die Förderbandstrebe und damit auch das Förderband nicht parallel zur Aufstandsfläche erstrecken soll, sondern vielmehr mit einem Neigungswinkel geneigt sein soll, so dass eine Förderung des Förderguts auch unter einem Winkel gegenüber der Horizontalen erfolgen kann. Hierbei ist möglich, dass auch zwei Förderbandstreben in dem Befestigungsbereich des Seitenschenkels unter demselben Neigungswinkel gegenüber der Aufstandsfläche befestigt werden können (im Folgenden auch als "Neigungsmodul" bezeichnet) oder eine auf einer Seite an dem Seitenschenkel befestigte Förderbandstrebe mit einem ersten Neigungswinkel gegenüber der horizontalen Aufstandsfläche geneigt ist und eine auf der anderen Seite angeordnete Förderbandstrebe unter einem anderen Neigungswinkel gegenüber der Aufstandsfläche geneigt ist, wobei auch einer der Neigungswinkel Null sein kann (im Folgenden auch als "Übergangsmodul" bezeichnet). Auf diese Weise kann somit auch eine Veränderung des Neigungswinkels für die Förderrichtung des Förderbands herbeigeführt werden.

Für einen anderen Vorschlag ermöglicht der Befestigungsbereich des Seitenschenkels eine Befestigung mindestens einer Förderbandstrebe für unterschiedliche Neigungswinkel gegenüber der Aufstandsfläche. Hierbei können die Neigungswinkel stufenlos oder in Stufen verändert werden. Möglich ist beispielsweise, dass der Befestigungsbereich eine Aufnahme für die Förderbandstrebe aufweist. Die Aufnahme ist dann, beispielsweise über Langlöcher oder unterschiedliche Befestigungsbohrungen, mit dem Seitenschenkel verschraubbar, so dass die Orientierung der Aufnahme gegenüber der Horizontalen in Stufen oder stufenlos veränderbar ist. Dies ermöglicht eine Variation des Neigungswinkels je nach Einbaubedingungen des Förderbandstraßen-Aufstandsbetonmoduls. Auf diese Weise kann ein baugleiches Förderbandstraßen-Aufstandsbetonmodul auch eingesetzt werden an Einbauorten, die unterschiedliche Neigungswinkel erfordern.

Alternativ oder kumulativ möglich ist, dass der Förderbandstreben-Auflagebereich nicht horizontal orientiert ist, sondern mit einem Neigungswinkel geneigt ist. Hierbei kann der Neigungswinkel durchgehend sein, so dass die Förderbandstreben auf beiden Seiten mit demselben Neigungswinkel geneigt sind (Neigungsmodul). Ebenfalls möglich ist, dass der Förderbandstreben-Auflagebereich zwei Teilbereiche aufweist, die dann unterschiedliche Neigungswinkel aufweisen und für unterschiedliche Förderbandstreben auf beiden Seiten des Förderbandstraßen-Aufstandsbetonmoduls bestimmt sind.

Die Erfindung umfasst Ausführungsformen, bei welchen das Förderbandstraßen-Aufstandsbetonmodul einstückig ausgebildet ist, wobei dieses durchaus als Verbundkörper ausgebildet sein kann oder unterschiedliche Teilbereiche aufweisen kann aus unterschiedlichen Materialien, die stoffschlüssig miteinander verbunden sind. Möglich ist aber auch, dass das Förderbandstraßen-Aufstandsbetonmodul modular ausgebildet ist mit mindestens zwei Teilmodulen, die dann miteinander verbunden oder montiert werden können. Hierbei können die Teilmodule gemeinsam den U-förmigen oder H -förmigen Grundkörper bilden oder ein Teilmodul ist der U-förmige oder H-förmige Grundkörper, welcher dann mit einem anderen Teilmodul kombiniert wird. Für einen Vorschlag der Erfindung verfügt das Förderbandstraßen-Aufstandsbetonmodul über einen Grundkörper, der beispielsweise wie oben erläutert grundsätzlich U-förmig oder H-förmig ausgebildet sein kann. Darüber hinaus verfügt das Förderbandstraßen-Aufstandsbetonmodul über mindestens ein weiteres Teilmodul, welches als Befestigungs- und/oder Auflage-Teilmodul ausgebildet ist, welches an dem Grundkörper befestigt wird oder auf diesem lose aufliegt. Hierbei wird vorzugsweise eine Förderbandstrebe über das Befestigungs- und/oder Auflage-Teilmodul an dem Grundkörper abgestützt oder befestigt. Das Befestigungs- und/oder Auflage-Teilmodul kann somit zwischen die Förderbandstrebe und den Grundkörper zwischengeordnet sein und eine Kraft von der Förderbandstrebe an den Grundkörper übertragen. Andererseits kann das Befestigungs- und/oder Auflage-Teilmodul an die Befestigungs- und/oder Auflagefunktion angepasst sein, wozu auch dann andere Materialien verwendet werden können als für den Grundkörper. Möglich ist auch, dass je nach Einsatzzweck des Förderbandstraßen-Aufstandsbetonmoduls derselbe Grundkörper mit unterschiedlichen Befestigungs- und/oder Auflage-Teilmodulen verwendet wird. Um lediglich ein die Erfindung nicht beschränkendes Beispiel zu nennen, können Grundkörper mit unterschiedlichen Befestigungs- und/oder Auflage-Teilmodulen kombiniert werden, die dann jeweils eine Befestigung von Förderbandstreben mit unterschiedlichen Neigungswinkeln gegenüber der Aufstandsfläche ermöglichen. Je nach gewünschter Neigung der Förderbandstrebe kann dann in einem Modulsatz das zugeordnete Befestigungs- und/oder Auflage-Teilmodul ausgewählt werden und an den Grundkörper angesetzt oder an dem Grundkörper befestigt werden.

Wird die Förderbandstrebe über das Befestigungs- und/oder Auflagemodul an dem Grundkörper abgestützt oder befestigt, kann das Befestigungs- und/oder Auflage-Teilmodul eine Keilfläche aufweisen. Der Keilwinkel der Keilfläche gibt dann einen Neigungswinkel vor, unter welchen eine Förderbandstrebe dann an dem Förderbandstraßen-Aufstandsbetonmodul befestigt werden kann. Unter Umständen erfolgt eine Aufteilung der Abstützkraft der Förderbandstrebe derart, dass einerseits ein Teil der Kraft, insbesondere eine laterale Kraft, über eine Befestigung zwischen der Förderbandstrebe und dem Seitenschenkel des Förderbandstraßen-Aufstandsbetonmoduls abgestützt ist, wobei dies unmittelbar oder Zwischenschaltung des Befestigungs- und/oder Auflage-Teilmoduls erfolgen kann. Ein anderer Teil der Kraft wird dann durch die Auflage der Förderbandstrebe zumindest mit einer Vertikalkraftkomponente an dem Auflage-Teilmodul abgestützt.

Möglich ist auch, dass bei einem Förderbandstraßen-Aufstandsbetonmodul eine Stirnseite eines Seitenschenkels mindestens ein Formschlusselement aufweist. Handelt es sich bei der Stirnseite um die Stirnseite eines Seitenschenkels eines U-förmigen Grundkörpers, kann über das Formschlusselement ein formschlüssiges Eingreifen in ein entsprechendes Gegen-Formschlusselement eines über dem Förderbandstraßen-Aufstandsbetonmodul angeordneten weiteren Bauelements, insbesondere eines weiteren darauf aufstehenden Förderbandstraßen-Aufstandsbetonmoduls, erfolgen.

Für einen Vorschlag der Erfindung weist die Förderbandstraße ein Set von unterschiedlichen Förderbandstraßen-Aufstandsbetonmodulen auf. Hierbei sind einzelne oder sämtliche Förderbandstraßen-Aufstandsbetonmodule so ausgebildet wie dies zuvor erläutert worden ist. Das erfindungsgemäße Set kann eine beliebige Anzahl (mindestens zwei, mindestens drei oder mindestens vier) und Kombination der unterschiedlichen im Folgenden genannten Module aufweisen:
a) Möglich ist, dass das Set mindestens ein Förderbandstraßen-Aufstandsbetonmodul aufweist, welches als "Horizontalmodul" ausgebildet ist. Ein derartiges Horizontalmodul zeichnet sich dadurch aus, dass an diesem Förderbandstraßen-Aufstandsbetonmodul Förderbandstreben bei Ausrichtung parallel zur Horizontalen oder zur Aufstandsfläche befestigt werden können. Derartige Förderbandstraßen-Aufstandsbetonmodule können somit Einsatz finden, wenn das Fördergut parallel zum Boden, zur Horizontalen oder zur Aufstandsfläche transportiert werden soll.
b) Möglich ist, dass das Set ein Förderbandstraßen-Aufstandsbetonmodul aufweist, welches als "Übergangsmodul" ausgebildet ist. Ein derartiges Übergangsmodul zeichnet sich dadurch aus, dass an diesen der Befestigungs- und/oder Auflagebereich so ausgebildet ist, dass eine Förderbandstrebe bei Ausrichtung parallel zur Horizontalen oder zur Aufstandsfläche befestigt werden kann, während eine andere Förderbandstrebe unter einem Neigungswinkel gegenüber der Horizontalen oder gegenüber der Aufstandsfläche befestigt werden kann. Ein derartiges Förderbandstraßen-Aufstandsbetonmodul kann genutzt werden, wenn auf einer Seite von dem Förderbandstraßen-Aufstandsbetonmodul die horizontale Förderung des Förderguts erfolgen soll, während auf der anderen Seite die Förderung des Förderguts mit dem Neigungswinkel ansteigend oder abfallend gefördert werden soll.
c) Möglich ist, dass in dem Set ein Förderbandstraßen-Aufstandsbetonmodul als "Neigungsmodul" ausgebildet ist. Ein derartiges Neigungsmodul zeichnet sich dadurch aus, dass dieses Befestigungsbereiche und/oder Förderbandstreben-Auflagebereiche aufweist, die ermöglichen, dass Förderbandstreben auf beiden Seiten unter demselben Neigungswinkel gegenüber der Aufstandsfläche oder Horizontalen befestigt werden können. Ein derartiges Neigungsmodul kann dann eingesetzt werden, wenn auf beiden Seiten die Förderung des Förderguts unter demselben Neigungswinkel erfolgen soll.
d) In dem Set kann auch ein als "Antriebsmodul" ausgebildetes Förderbandstraßen-Aufstandsbetonmodul Einsatz finden. An einem derartigen Antriebsmodul kann ein Antrieb, insbesondere ein Motor, ein Getriebe und eine Antriebsrolle, befestigt werden, der (unmittelbar oder mittelbar) für den Antrieb des Förderbands dient.
e) Möglich ist, dass in dem Set ein Förderbandstraßen-Aufstandsbetonmodul als "Umlenkrollenmodul" ausgebildet ist. An einem derartigen Umlenkrollenmodul kann eine Umlenkrolle befestigt werden, im Bereich welcher die Umlenkung des Förderbands von dem Obertrum zum Untertrum erfolgt. Das Umlenkrollenmodul kann einerseits einen Befestigungsbereich zur drehbaren Lagerung der Umlenkrolle bereitstellen. Andererseits möglich ist, dass das Umlenkrollenmodul einen spezifisch für die Aufnahme der Umlenkrolle gestalteten Aufnahmeraum, insbesondere zwischen dem Grundschenkel und den Seitenschenkeln des Grundkörpers, aufweist.
f) Möglich ist, dass das Set über ein "Brückenmodul" verfügt. Ein derartiges Brückenmodul findet insbesondere dann Einsatz, wenn sich zwei Förderbänder in Höhenrichtung, insbesondere in einem Übergabebereich, überlappen. Hierbei können die beiden Förderbänder in einer Draufsicht entlang einer gemeinsamen Achse verlaufen oder unter einem Winkel und insbesondere vertikal zueinander verlaufen. Das Brückenmodul ermöglicht einerseits auf diesem (unmittelbar oder unter Einsatz eines weiteren Förderbandstraßen-Aufstandsbetonmoduls) eine Abstützung des oberen Förderbands und andererseits einen Durchtritt des unteren Förderbands durch das Brückenmodul.
g) Möglich ist des Weiteren, dass in dem Set ein Förderbandstraßen-Aufstandsbetonmodul enthalten ist, welches modular ausgebildet ist. Beispielsweise kann das modulare Förderbandstraßen-Aufstandsbetonmodul ein Befestigungs- und/oder Auflage-Teilmodul aufweisen, wie dieses zuvor erläutert worden ist und welches für die Vorgabe eines Neigungswinkels dient.
h) Möglich ist auch, dass in dem Set ein Förderbandstraßen-Aufstandsbetonmodul enthalten ist, welches als "Solarmodul" ausgebildet ist. Dieser Ausgestaltung der Erfindung liegt die Erkenntnis zugrunde, dass sich eine im Freien angeordnete Förderbandstraße dazu eignen kann, mindestens ein Solarmodul zu halten. Die von dem Solarmodul bereitgestellte Energie kann dann zum Betrieb der Förderbandstraße genutzt werden, gespeichert werden oder in eine Netz eingespeist werden. Um lediglich ein die Erfindung nicht beschränkendes Beispiel zu nennen, können die Seitenschenkel des Grundkörpers des Förderbandstraßen-Aufstandsbetonmoduls (vorzugsweise im Bereich ihrer Außenseiten) einen Befestigungsbereich oder einen Flansch aufweisen, an welchem dann ein Tragelement für eine Solaranlage oder ein Solarpaneel befestigt werden kann.

Die Lösung der der Erfindung zugrunde liegenden Aufgabe stellt eine Förderbandstraße dar, die mehrere Förderbandstraßen-Aufstandsbetonmodule aufweist, wie diese zuvor erläutert worden sind. Diese mehreren Förderbandstraßen-Aufstandsbetonmodule stehen dann lose auf dem Boden und/oder aufeinander auf. Hierbei können die Förderbandstraßen-Aufstandsbetonmodule gleich oder unterschiedlich ausgebildet sein. Möglich ist auch, dass die Förderbandstraße mit einem Set von Förderbandstraßen-Aufstandsbetonmodulen gebildet ist, wie dieses zuvor erläutert worden ist.

Grundsätzlich kann die Förderbandstraße beliebig ausgebildet sein, wobei in der Förderbandstraße die Förderbandstraßen-Aufstandsbetonmodule mit grundsätzlich bekannten Förderrollensystemen, Umlenkrollen und Antrieben ausgestattet sein können. Für eine erfindungsgemäße Förderbandstraße bilden die Förderbandstraßen-Aufstandsbetonmodule (einzeln oder mehrere aufeinander aufstehende Förderbandstraßen-Aufstandsbetonmodule) Tragstützen. Benachbarte Tragstützen sind über Förderbandstreben miteinander verbunden. Hierbei sind die Förderbandstreben jeweils in ihren Endbereichen an den Förderbandstraßen-Aufstandsbetonmodulen der benachbarten Tragstützen befestigt, während sich diese frei zwischen den Tragstützen erstrecken. An den Förderbandstreben sind dann die Förderbandrollen abgestützt.

Für einen Vorschlag der Erfindung hält eine von mindestens einem Förderbandstraßen-Aufstandsbetonmodul ausgebildete Tragstütze ein erstes Förderband in einer ersten Höhe. Eine ebenfalls von mindestens einem Förderbandstraßen-Aufstandsbetonmodul ausgebildete Tragstütze hält ein zweites Förderband in einer zweiten Höhe. Hierbei ist die zweite Höhe kleiner als die erste Höhe. In einem Übergabebereich (im Bereich dessen auch das zuvor genannte Brückenmodul angeordnet sein kann) wird das erste Förderband über eine Antriebsrolle oder eine Umlenkrolle umgelenkt, was zur Folge hat, dass auf dem ersten Förderband gefördertes Fördergut im Bereich der Antriebsrolle oder Umlenkrolle von dem ersten Förderband herunterfällt. Unter der Antriebsrolle oder Umlenkrolle ist dann das zweite Förderband angeordnet, so dass dieses das herunterfallende Fördergut aufnehmen und weiter transportieren kann. Möglich ist, dass das erste Förderband und das zweite Förderband in einer Draufsicht dieselbe Förderachse aufweisen oder die Förderbänder Förderachsen aufweisen, die um einen Winkel (beispielsweise von 90°) zueinander in der Draufsicht voneinander abweichen.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 bis 21**: zeigen unterschiedliche Ausgestaltungen eines Förderbandstraßen-Aufstandsbetonmoduls, wobei Fig. 9, 17, 18 die Anordnung eines Förderbandstraßen-Aufstandsbetonmoduls auf einem anderen Förderbandstraßen-Aufstandsbetonmodul oder Zwischenmodul zeigen.
- **Fig. 22**: zeigt ein modulares, als Neigungsmodul ausgebildetes Förderbandstraßen-Aufstandsbetonmodul mit daran befestigten Paaren von Förderbandstreben.
- **Fig. 23 bis 25**: zeigen unterschiedliche Ausgestaltungen eines Innengewindeeinsatzes, der in ein Förderbandstraßen-Aufstandsbetonmodul eingegossen sein kann.
- **Fig. 26 bis 35**: zeigen Teilausschnitte unterschiedlicher Förderbandstraßen, die vorzugsweise mit Förderbandstraßen-Aufstandsbetonmodulen gebildet sind, wie diese in Fig. 1 bis 21 dargestellt sind.
- **Fig. 36**: zeigt einen Teil einer Förderbandstraße mit Förderbandstraßen-Aufstandsbetonmodulen, welche als Solarmodule ausgebildet sind, in einer räumlichen Ansicht.

### FIGURENBESCHREIBUNG

In der Figurenbeschreibung werden für dieselben oder unterschiedliche Ausführungsbeispiele teilweise für hinsichtlich der Geometrie und/oder Funktion zumindest teilweise entsprechende Bauelemente dieselbe Bezugsnummer verwendet, wobei dann diese Bauelemente durch einen ergänzenden Buchstaben a, b, ... voneinander unterschieden sein können. Auf diese Bauelemente wird dann mit oder ohne den ergänzenden Buchstaben Bezug genommen, wobei dann ein Bauelement, mehrere oder sämtliche Bauelemente gemeint sein können.

Möglich ist im Rahmen der Erfindung, dass für ein Ausführungsbeispiel dargestellte und beschriebene Teilbereiche oder Komponenten alternativ oder zusätzlich Einsatz finden können für Teilbereiche oder Komponenten eines anderen Ausführungsbeispiels.

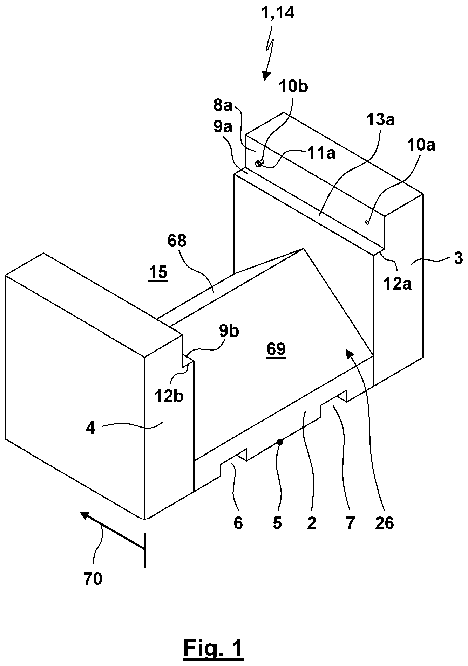

**Fig. 1** zeigt ein Förderbandstraßen-Aufstandsbetonmodul 1 in einer räumlichen Ansicht. Das Förderbandstraßen-Aufstandsbetonmodul 1 verfügt in einer Vorderansicht über eine in grober Näherung U-förmige Geometrie mit einem Grundschenkel 2 und zwei parallelen Seitenschenkeln 3, 4. Der Grundschenkel 2 und die Seitenschenkel 3, 4 verfügen über eine gewisse Erstreckung in Blickrichtung von vorne, welche auch als Längserstreckung 70 gekennzeichnet ist, so dass der Grundschenkel 2 in grober Näherung plattenförmig ausgebildet ist und die Seitenschenkel 3, 4 in der Art von Wangen ausgebildet sind. Der Grundschenkel 2 bildet auf seiner Unterseite eine Aufstandsfläche 5. Mittels der Aufstandsfläche 5 steht das Förderbandstraßen-Aufstandsbetonmodul 1 (bei vorzugsweise horizontaler Ausrichtung der Aufstandsfläche) auf dem Boden, einem Fundament oder einem darunter angeordneten Bauelement oder Förderbandstraßen-Aufstandsbetonmodul 1 auf. Der Grundschenkel 2 verfügt über Ausnehmungen 6, 7, deren Abstand geeignet bemessen ist und deren Querschnitt geeignet bemessen ist, damit Zinken eines Gabelstaplers in diese eintreten können und das Förderbandstraßen-Aufstandsbetonmodul 1 mittels der Zinken des Gabelstaplers angehoben werden kann. Für das in Fig. 1 dargestellte Ausführungsbeispiel sind die Ausnehmungen 6, 7 mit einem randoffenen Querschnitt ausgestaltet und als geradlinige Nuten der Aufstandsfläche 5 ausgebildet. Die Oberseite des Grundschenkels 2 ist hier nicht eben und parallel zur Aufstandsfläche 5 ausgebildet. Vielmehr verfügt die Oberseite des Grundschenkels 2 über zwei giebelartig geneigte Schrägflächen 68, 69, die gegenüber der Horizontalen bzw. der Aufstandsfläche 5 für das dargestellte Ausführungsbeispiel um denselben Winkel in entgegengesetzte Richtungen geneigt sind. Der Giebel der Schrägflächen 68, 69 erstreckt sich hier vertikal zu den von den Seitenschenkeln 3, 4 gebildeten Wangen. Die Schrägflächen 68, 69 sind für das dargestellte Ausführungsbeispiel gleich groß und bilden die Oberseite des Grundschenkels 2. Durchaus möglich ist aber auch, dass die Schrägflächen 68, 69 über einen horizontal abgeplatteten mittigen Abschnitt miteinander verbunden sind, unterschiedliche Neigungswinkel aufweisen u. ä.

Die Seitenschenkel 3, 4 des Grundkörpers 26 verfügen jeweils auf ihren einander zugewandten Innenseiten über einen Befestigungsbereich 8a, 8b und einen Förderbandstreben-Auflagebereich 9a, 9b.

Für das dargestellte Ausführungsbeispiel ist der Befestigungsbereich 8 von einer Vertikalfläche des Seitenschenkels 3 gebildet und verfügt über Innengewindeeinsätze 10, in welche eine Schraube 11 eingeschraubt werden kann und auf diese Weise ein Bauelement der Förderbandstraße (insbesondere eine Förderbandstrebe) an dem Befestigungsbereich 8 und damit an dem Förderbandstraßen-Aufstandsbetonmodul 1 befestigt werden kann.

Der Förderbandstreben-Auflagebereich 9 ist von einer Stufe oder einem Absatz 12 des Seitenschenkels 3, 4 ausgebildet, der eine Auflagefläche 13 bildet, die hier parallel zur Aufstandsfläche 5 orientiert ist. Auf der Auflagefläche 13, kann ein Bauelement der Förderbandstraße, insbesondere eine Förderbandstrebe aufliegen und großflächig abgestützt sein.

Die Seitenschenkel 3, 4 und der Grundschenkel 2 begrenzen einen nach oben offenen Aufnahmeraum 15.

In Fig. 1 sind die Seitenschenkel 3, 4 von dem Grundschenkel 2 über Trennlinien voneinander getrennt. Durchaus möglich ist, dass eine modulare Fertigung des Förderbandstraßen-Aufstandsbetonmoduls 1 erfolgt, indem einerseits der Grundschenkel 2 sowie andererseits die beiden Seitenschenkel 3, 4 separat gefertigt werden und diese dann anschließend über Befestigungsschrauben, Zuganker oder stoffschlüssig miteinander verbunden werden. Vorzugsweise erfolgt aber eine einstückige Fertigung des Förderbandstraßen-Aufstandsbetonmoduls durch Gießen in entsprechenden Formen, ggf. mit Einlagern, Zugankern, Versteifungen u. Ä.

Das Förderbandstraßen-Aufstandsbetonmodul 1 verfügt vorzugsweise über eine (mit Ausnahme des Aufnahmeraums 15) quaderförmige Außengeometrie. Das Förderbandstraßen-Aufstandsbetonmodul 1 verfügt über einen Grundkörper 26 aus Beton, wobei der Grundkörper 26 auch stoffschlüssig angebundene Komponenten aus einem anderen Material, Versteifungen, Zuganker u. ä. aufweisen kann oder aus einem Beton aufweisenden Verbundmaterial hergestellt sein kann.

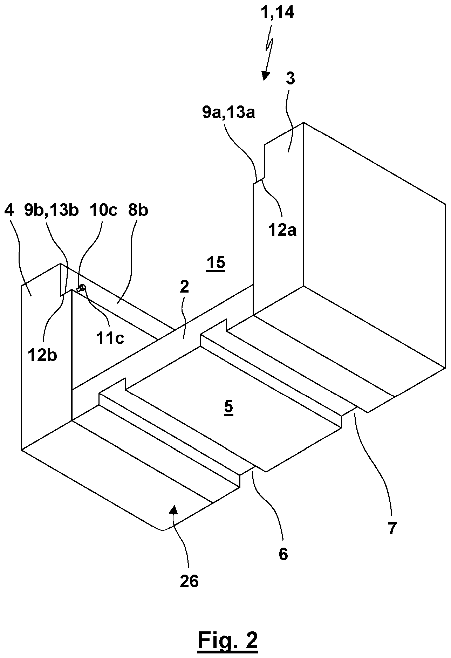

**Fig. 2** zeigt das Förderbandstraßen-Aufstandsbetonmodul 1 gemäß Fig. 1 in einer räumlichen Ansicht schräg von unten.

Bei dem Förderbandstraßen-Aufstandsbetonmodul 1 gemäß Fig. 1 und 2 handelt es sich um ein Horizontalmodul 14, da dies infolge der horizontalen Ausrichtung des Befestigungsbereichs 8 und des Förderbandstreben-Auflagebereichs 9 die horizontale Befestigung einer Förderbandstrebe ermöglicht.

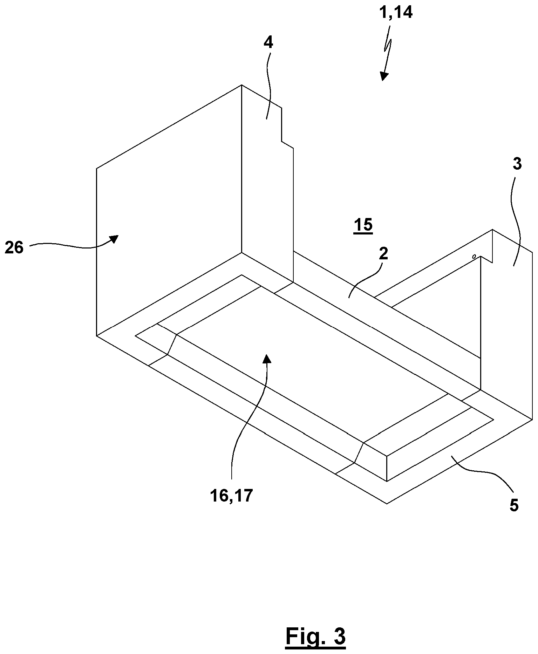

**Fig. 3** zeigt ein anderes Förderbandstraßen-Aufstandsbetonmodul 1 in räumlicher Ansicht schräg von unten. Das Förderbandstraßen-Aufstandsbetonmodul 1 verfügt nicht über die Ausnehmungen 6, 7 für Zinken eines Gabelstaplers. Vielmehr verfügt hier die Aufstandsfläche 5 oder die Unterseite des Grundschenkels 2 über ein Formschlusselement 16, welches hier als Vertiefung 17 mit einem rechteckigen Querschnitt und Abschrägungen im Randbereich ausgebildet ist. Außerhalb der Vertiefung 17 verbleibt eine umlaufende, streifenförmige Aufstandsfläche 5 des Förderbandstraßen-Aufstandsbetonmoduls 1. In die Vertiefung 17 kann mindestens ein Gegen-Formschlusselement eines darunter angeordneten Bauelements der Förderbandstraße eintreten, womit das Förderbandstraßen-Aufstandsbetonmodul 1 gegenüber einer Relativverschiebung mit einer Bewegungsrichtung in einer Horizontalebene gesichert werden kann.

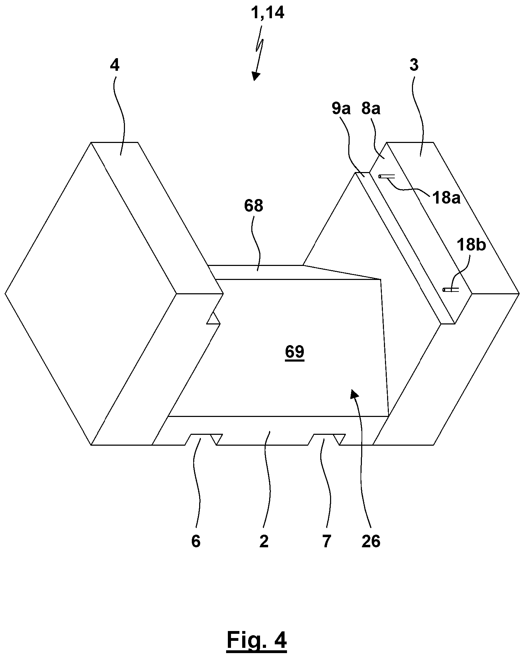

**Fig. 4** zeigt eine grundsätzlich den Ausführungsbeispielen gemäß Fig. 1 und 2 entsprechende Ausführungsform eines Förderbandstraßen-Aufstandsbetonmoduls 1. Allerdings verfügen hier die Befestigungsbereiche 8 nicht über Innengewindeeinsätze 10, sondern über Außengewindeeinsätze 18, bei denen es sich beispielsweise um in das Betonmaterial der Seitenschenkel 3, 4 eingegossene und mit einem Endbereich aus diesen nach innen auskragende Gewindestangen handeln kann.

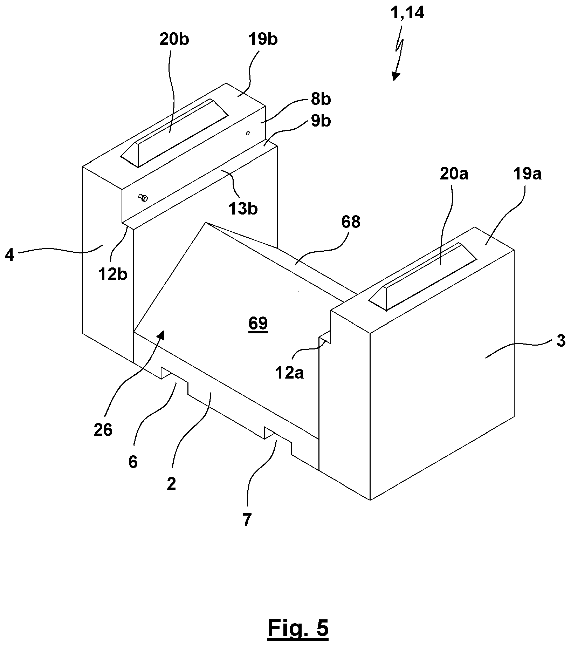

**Fig. 5** zeigt in einer räumlichen Ansicht ein Förderbandstraßen-Aufstandsbetonmodul 1 grundsätzlich entsprechend der Gestaltung Fig. 1 und 2. Allerdings sind hier im Bereich der Stirnseiten 19a, 19b der Seitenschenkel 3, 4 Formschlusselemente 20a, 20b angeordnet. Die Formschlusselemente 20 sind hier als Vorsprünge ausgebildet, die eintreten können in von entsprechenden Vertiefungen ausgebildete Gegen-Formschlusselemente eines darüber angeordneten Bauelements oder Förderbandstraßen-Aufstandsbetonmodul 1. Für das dargestellte Ausführungsbeispiel verfügen die Formschlusselemente 20 über eine trapezförmige Kontur, wobei die abgeschrägten Seitenflächen ein Führen bei dem Eintreten in das Gegen-Formschlusselement gewährleisten können.

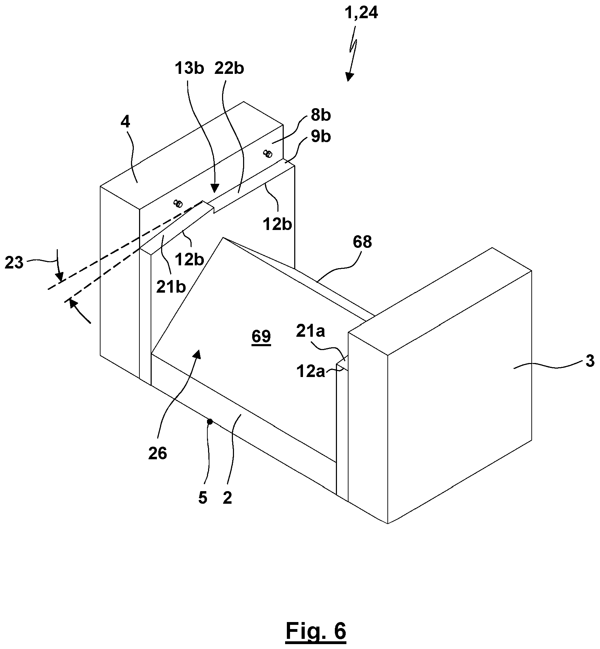

**Fig. 6** zeigt, ebenfalls in einer räumlichen Ansicht schräg von oben, ein Förderbandstraßen-Aufstandsbetonmodul 1 in Ausgestaltung als Übergangsmodul 24. Hier sind die Auflageflächen 13 der Seitenschenkel 3, 4 nicht durchgehend parallel zur Aufstandsfläche 5 ausgebildet. Vielmehr verfügt die Auflagefläche 13 über Auflageflächen-Teilbereiche 21, 22, die sich über die halbe Längserstreckung 70 der Seitenschenkel 3, 4 erstrecken. Der Auflageflächen-Teilbereich 22 ist hierbei horizontal oder parallel zu der Aufstandsfläche 5 orientiert. Hingegen ist der Auflageflächen-Teilbereich 21 um einen Neigungswinkel 23 gegenüber der Horizontalen oder Aufstandsfläche 5 geneigt.

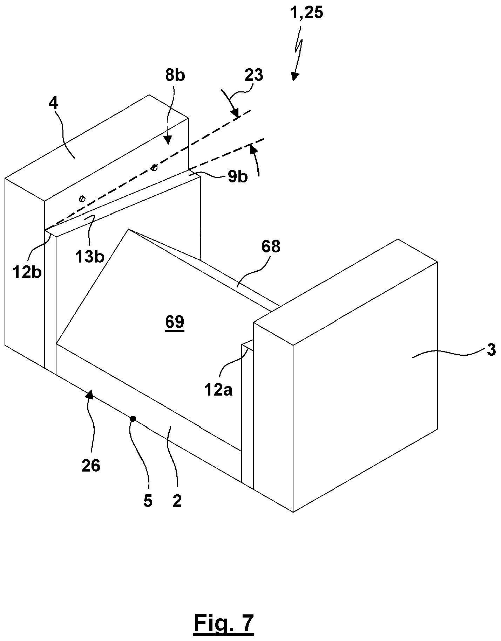

Hingegen verfügt für das in **Fig. 7** dargestellte Ausführungsbeispiel des Förderbandstraßen-Aufstandsbetonmoduls 1, welches in diesem Fall als Neigungsmodul 25 ausgebildet ist, die Auflagefläche 13 nicht über die beiden Auflageflächen-Teilbereiche 21, 22. Vielmehr ist hier die gesamte Auflagefläche 13 um den Neigungswinkel 23 gegenüber der Aufstandsfläche 5 geneigt.

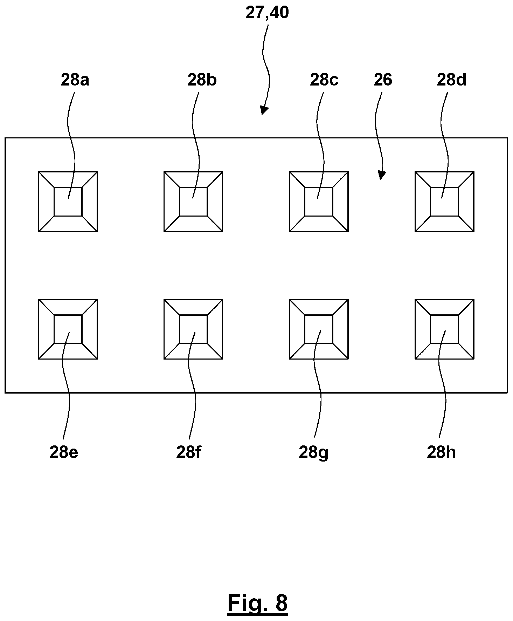

**Fig. 8** zeigt ein als Zwischenmodul 40 ausgebildetes Förderbandstraßen-Aufstandsbetonmodul 27 mit einem quaderförmigen Grundkörper 26 in einer Draufsicht. Auf einer Oberseite des Förderbandstraßen-Aufstandsbetonmoduls 27 befinden sich gleichmäßig verteilt Formschlusselemente 28. Die Formschlusselemente 28 sind als Vorsprünge, hier als pyramidenstumpfförmige Vorsprünge, ausgebildet. Dieses Förderbandstraßen-Aufstandsbetonmodul 27 ist vorzugsweise als an sich bekannter Betonblockstein oder Betonstein im Lego-System ausgebildet.

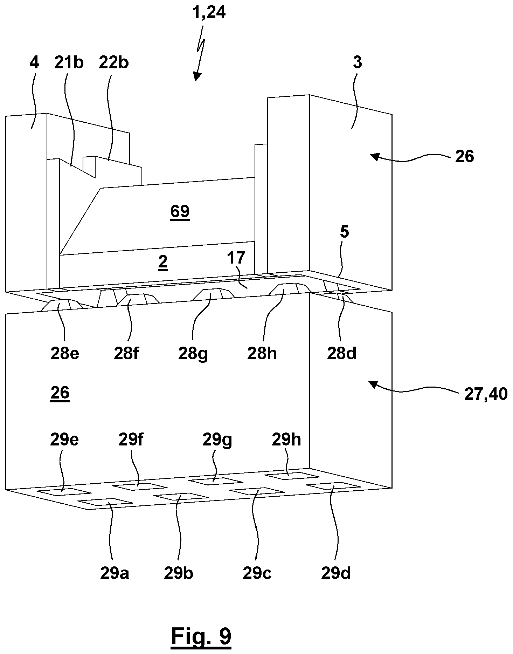

**Fig. 9** zeigt zunächst ebenfalls das Förderbandstraßen-Aufstandsbetonmodul 27 in einer räumlichen Ansicht schräg von unten, in welcher einerseits auf der Oberseite die Formschlusselemente 28 in Form der Vorsprünge zu erkennen sind und andererseits auf einer Unterseite des Förderbandstraßen-Aufstandsbetonmoduls 27 weitere Formschlusselemente 29, hier in Ausgestaltung als Vertiefungen, zu erkennen sind.

Fig. 9 zeigt die Herstellung einer Verbindung des Förderbandstraßen-Aufstandsbetonmoduls 27 mit einem Förderbandstraßen-Aufstandsbetonmodul 1, welches als Übergangsmodul 24 gemäß Fig. 6 ausgebildet ist (wobei hier allerdings der geneigte Auflageflächen-Teilbereich 21 nicht mit einem Neigungswinkel 23 nach unten geneigt ist, sondern vielmehr nach oben). Das Übergangsmodul 24 verfügt über ein Formschlusselement 16 in Form einer Vertiefung 17, wie diese in Fig. 3 dargestellt ist. Hierbei ist die Vertiefung 17 so bemessen, dass in diese passgenau die Formschlusselemente 28 eintreten kann, so dass die streifenförmige verbleibende Aufstandsfläche 5 die Formschlusselemente 28 mit einem geringen Spiel oder sogar ohne Spiel umgibt. Der Neigungswinkel der randseitigen Abschrägungen der Vertiefung 17 kann dabei den Neigungswinkel der pyramidenstumpfförmigen Formschlusselemente 28 entsprechen. Ist die Verbindung zwischen den Förderbandstraßen-Aufstandsbetonmodulen 1, 27 hergestellt, steht die Aufstandsfläche 5 des Förderbandstraßen-Aufstandsbetonmoduls 1 auf der Oberseite des Förderbandstraßen-Aufstandsbetonmoduls 27 außerhalb der Formschlusselemente 28 auf und der Eingriff der Formschlusselemente 28 in die Vertiefung 17 sichert die laterale Lage des Förderbandstraßen-Aufstandsbetonmoduls 1 relativ zu dem Förderbandstraßen-Aufstandsbetonmodul 27.

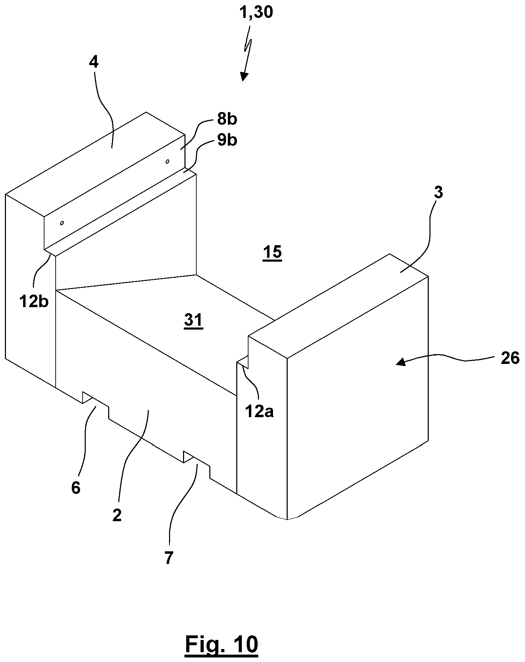

**Fig. 10** zeigt in einer räumlichen Ansicht schräg von oben ein Förderbandstraßen-Aufstandsbetonmodul 1 in Ausgestaltung als Umlenkrollenmodul 30. Dieses Umlenkrollenmodul 30 verfügt nicht über giebelartige Schrägflächen 68, 69. Vielmehr ist hier lediglich eine einzige, sich über den gesamten Grundschenkel 2 erstreckende Schrägfläche 31 vorhanden. Hierbei entspricht die Höhe der Ausgangskante der Schrägfläche 31 vorzugsweise der Höhe des Giebels der Schrägflächen 68, 69 gemäß Fig. 1, was zur Folge hat, dass bei gleicher Neigung der Schrägfläche 31 wie die Neigung der Schrägflächen 68, 69 der der Ausgangskante abgewandte Endbereich der Schrägfläche 31 weiter unten angeordnet ist als die entsprechenden Endbereiche der Schrägflächen 68, 69 für das Förderbandstraßen-Aufstandsbetonmodul 1 gemäß Fig. 1. Dies hat zur Folge, dass in diesem Teilbereich des Förderbandstraßen-Aufstandsbetonmoduls 1 der Aufnahmeraum 15 nach unten vergrößert ist. Dieser vergrößerte Aufnahmeraum 15 ermöglicht, dass in diesem Aufnahmeraum 15 eine Umlenkrolle angeordnet werden kann, die dann drehbar gegenüber den Seitenschenkeln 3, 4 gelagert sein kann.

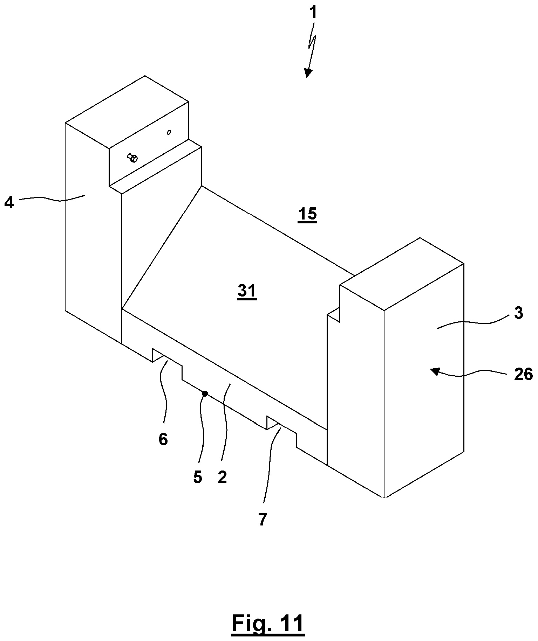

**Fig. 11** zeigt in einer räumlichen Ansicht schräg von oben ein Förderbandstraßen-Aufstandsbetonmodul 1, welches eine verringerte Längserstreckung 70 aufweist. Auch hier ist lediglich eine einzige Schrägfläche 31 vorhanden, die aber unter Umständen einen größeren Neigungswinkel aufweist. Die Schrägfläche 31 kann genutzt werden, um hierauf fallendes Material nach unten rutschen zu lassen.

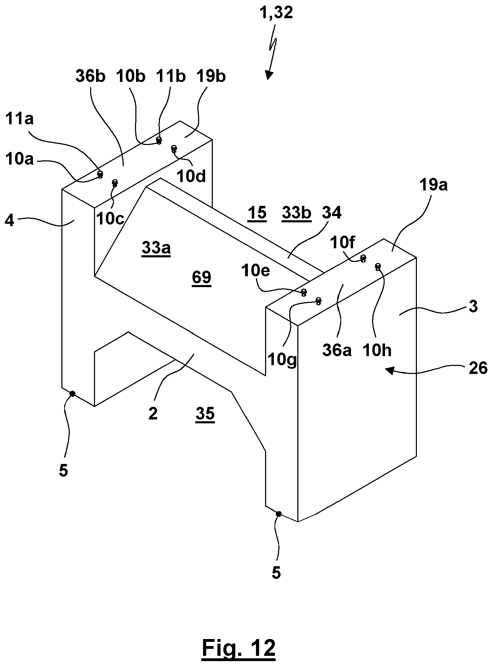

**Fig. 12** zeigt in einer räumlichen Ansicht schräg von oben ein Förderbandstraßen-Aufstandsbetonmodul 1, welches hier als Brückenmodul 32 ausgebildet ist. In diesem Fall ist der Grundkörper 26 des Förderbandstraßen-Aufstandsbetonmoduls 1 nicht in erster Näherung U-förmig ausgebildet, sondern vielmehr H-förmig mit einem Grundschenkel 2, der mittig die beiden Seitenschenkel 3, 4 miteinander verbindet. In diesem Fall wird die Aufstandsfläche 5 nicht von der Unterseite des Grundschenkels 2 gebildet, sondern vielmehr von den unten liegenden Stirnseiten der Seitenschenkel 3, 4. Da hier der Grundschenkel 2 mittig die Seitenschenkel 3, 4 verbindet, ist der oberhalb des Grundschenkels 2 gebildete Aufnahmeraum 15 deutlich verkleinert, wobei auch möglich ist, dass dieser lediglich mit zwei Teilaufnahmeräumen 33a, 33b auf beiden Seiten von den Schrägflächen 68, 69 gebildet ist. Für das in Fig. 12 dargestellte Ausführungsbeispiel verfügt der Giebel der Schrägflächen 68, 69 über eine Abflachung 34. Die unteren Teilbereiche der Seitenschenkel 3, 4 und die Unterseite des Grundschenkels 2 begrenzen einen weiteren, nach unten offenen Aufnahmeraum 35.

Die oberen Stirnseiten 19 der Seitenschenkel 3, 4 verfügen jeweils über einen Befestigungsbereich 36. In dem Befestigungsbereich 36 sind Befestigungselemente angeordnet, die hier beispielsweise als Innengewindeeinsätze 10 ausgebildet sind, in die Befestigungsschrauben 11 eingeschraubt werden können.

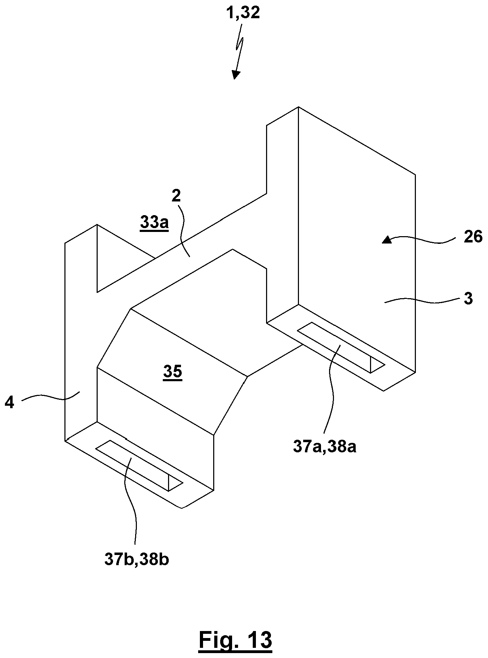

**Fig. 13** zeigt das Brückenmodul 32 gemäß Fig. 12 in einer räumlichen Ansicht schräg von unten. Zu erkennen ist hier, dass in die unteren Stirnseiten der Seitenschenkel 3, 4 Formschlusselemente 37 eingebracht sind, die hier als Vertiefungen 38 ausgebildet sind. Die Vertiefungen 38 sind von einer streifen- oder rahmenförmigen Aufstandsfläche 5 umgeben.

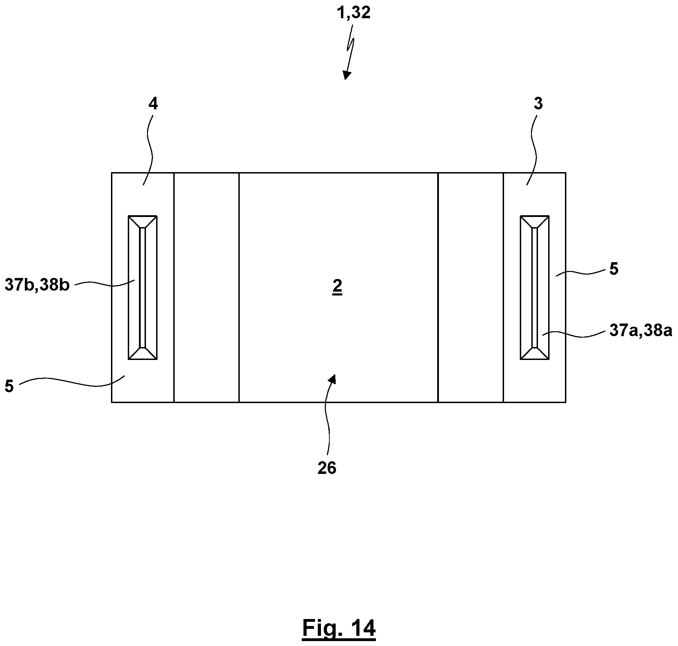

**Fig. 14** zeigt das Brückenmodul 32 gemäß Fig. 12 und 13 in einer Ansicht von unten, in der zu erkennen ist, dass die Vertiefungen 38 eine trapezförmige Kontur aufweisen. In die Vertiefungen 38 kann beispielsweise formschlüssig ein Formschlusselement 20 eines Horizontalmoduls 14 eintreten, wie dies in Fig. 5 dargestellt ist, wenn das Brückenmodul 32 gemäß Fig. 12 bis 14 auf einem Horizontalmodul 14 gemäß Fig. 5 aufsteht, womit eine formschlüssige laterale Sicherung erfolgt. Die Schrägflächen der Vertiefungen 38 können dabei entsprechend den Schrägflächen der Formschlusselemente 20 geneigt sein.

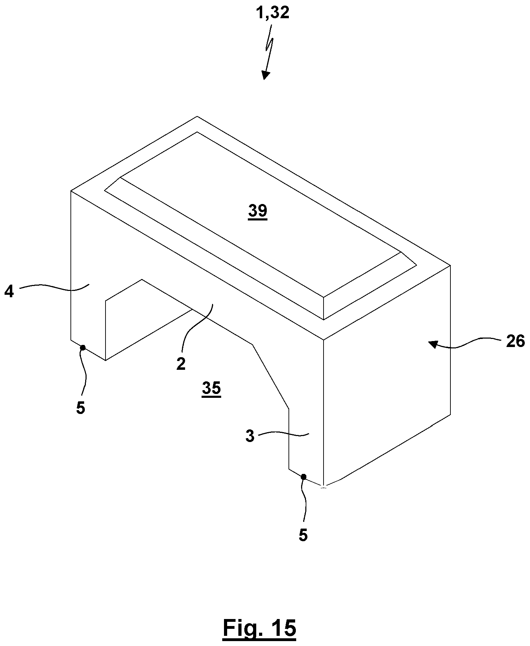

**Fig. 15** zeigt in einer räumlichen Ansicht schräg von oben eine andere Ausgestaltung eines Förderbandstraßen-Aufstandsbetonmodul 1 als Brückenmodul 32. In diesem Fall ist das Brückenmodul 32 entsprechend einem umgekehrten U ausgebildet, so dass sich der Grundschenkel 2 auf der Oberseite des Brückenmoduls 32 befindet. Der Grundschenkel 2 und die Seitenschenkel 3, 4 begrenzen in diesem Fall einen nach unten offenen Aufnahmeraum 35, der eine größere Höhe besitzen kann als für das Brückenmodul 32 gemäß Fig. 12 bis 14. In diesem Fall weist das Brückenmodul 32 auf der Oberseite lediglich ein einziges, sich bis auf eine rahmenförmige Umrandung über die gesamte Oberseite erstreckendes Formschlusselement 39 auf. Wird auf dem Brückenmodul 32 gemäß Fig. 15 ein Bauelement oder Förderbandstraßen-Aufstandsbetonmodul 1 aufgestellt, welches auf der Unterseite ein Formschlusselement 16 in Form einer Vertiefung 17, wie diese in Fig. 3 dargestellt ist, aufweist, aufgestellt, kann das Formschlusselement 39 formschlüssig zur lateralen Sicherung in das Formschlusselement 16 eintreten.

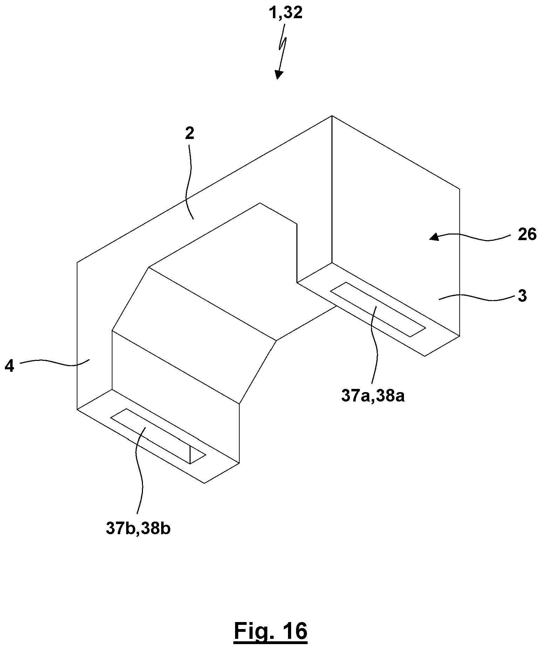

**Fig. 16** zeigt das Brückenmodul 32 gemäß Fig. 15 in einer räumlichen Ansicht schräg von unten. Hier ist zu erkennen, dass die unteren Stirnseiten der Seitenschenkel 3, 4 über Formschlusselemente 37 in Form von Vertiefungen 38 verfügen, wie diese für das Brückenmodul 32 gemäß Fig. 12 bis 14 dargestellt und beschrieben worden sind.

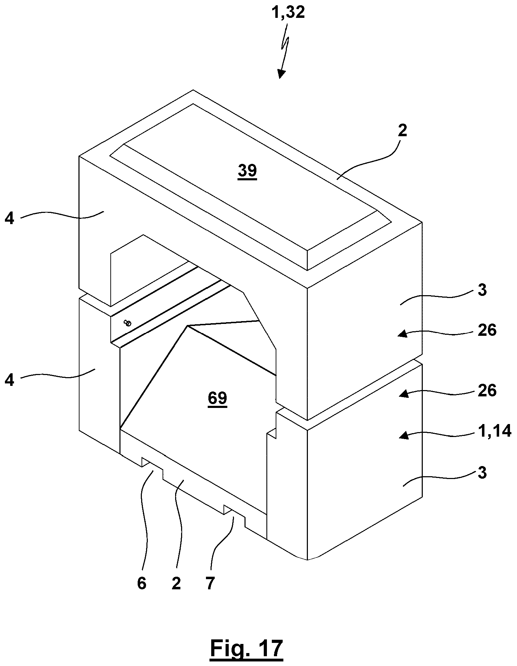

**Fig. 17** zeigt beispielhaft das Aufstellen eines Brückenmoduls 32 gemäß Fig. 15 und 16 auf ein Horizontalmodul 14 gemäß Fig. 5.

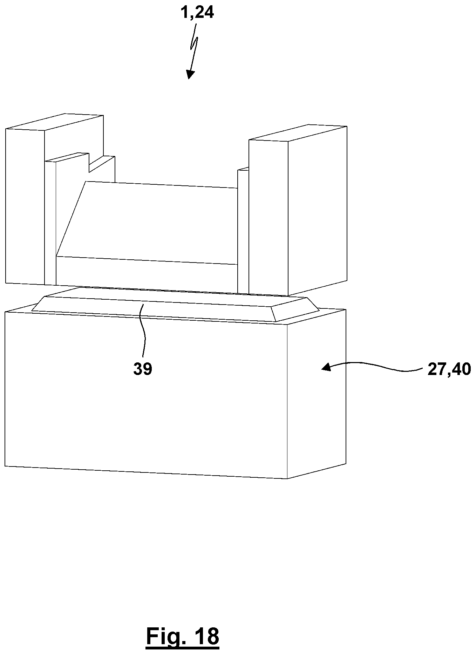

**Fig. 18** zeigt das Stapeln oder Aufstehen eines Übergangsmoduls 24 gemäß Fig. 6 (mit abweichender Neigung der Förderbandstreben-Auflagebereiche 9), welches auf seiner Unterseite ein Formschlusselement 16 in Form einer Vertiefung 17 aufweist, auf einem als Zwischenmodul 40 ausgebildeten Förderbandstraßen-Aufstandsbetonmodul 27. Hierbei verfügt das Zwischenmodul 40 auf seiner Oberseite über ein einziges Formschlusselement 39.

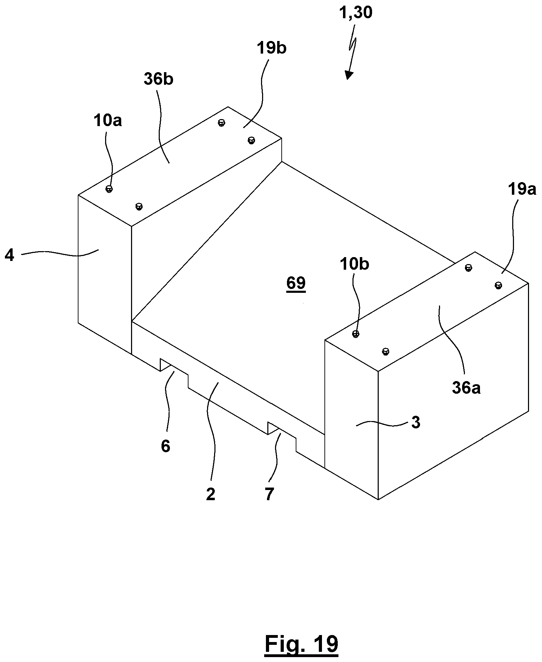

**Fig. 19** zeigt ein Förderbandstraßen-Aufstandsbetonmodul 1 in Ausgestaltung als Umlenkrollenmodul 30, welches gegenüber den zuvor erläuterten Förderbandstraßen-Aufstandsbetonmodulen 1 eine verringerte Höhe aufweisen kann. Das Umlenkrollenmodul 30 verfügt lediglich über eine einzige Schrägfläche 69. Im Bereich der Stirnseiten 19 der Seitenschenkel 3, 4 sind Befestigungsbereiche 36, hier mit Innengewindeeinsätzen 10, angeordnet.

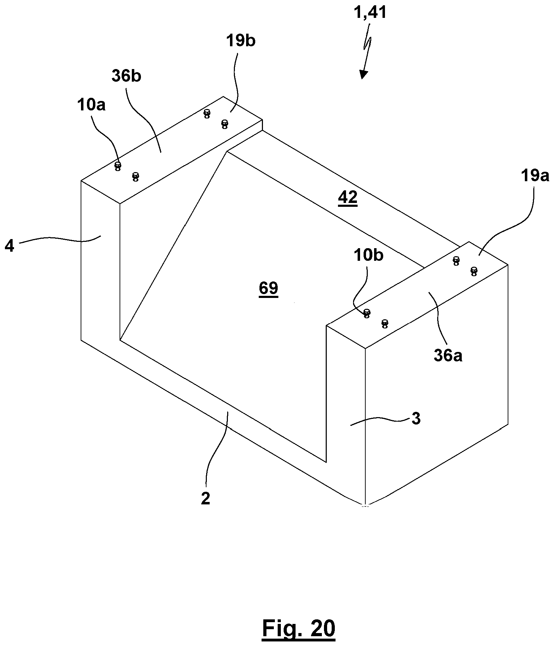

**Fig. 20** zeigt in räumlicher Ansicht schräg von oben ein als Antriebsmodul 41 ausgebildetes Förderbandstraßen-Aufstandsbetonmodul 1. Dieses verfügt über eine einzige Schrägfläche 69 sowie eine endseitige Abflachung 42. Auch bei dem Antriebsmodul 41 verfügen die Stirnseiten 19 der Seitenschenkel 3, 4 über Befestigungsbereiche 36, hier mit Innengewindeeinsätzen 10.

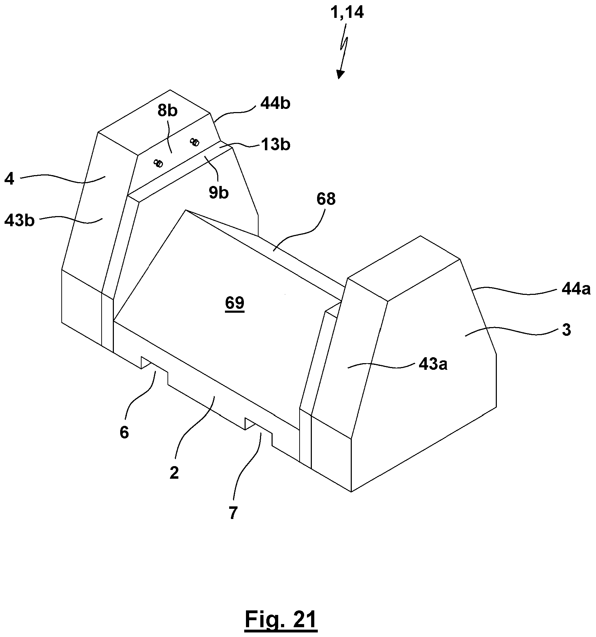

**Fig. 21** zeigt in einer räumlichen Ansicht schräg von oben ein Förderbandstraßen-Aufstandsbetonmodul 1 in Ausgestaltung als Horizontalmodul 14, welches grundsätzlich entsprechend dem Ausführungsbeispiel in Fig. 1 ausgebildet ist. Allerdings sind hier die die Seitenschenkel 3, 4 bildenden Wangen nicht mit einer rechteckigen Geometrie ausgestaltet, sondern vielmehr mit Abschrägungen 43, 44 versehen, so dass sich diese Wangen nach oben in Richtung des Endbereichs der Seitenschenkel 3, 4 verjüngen.

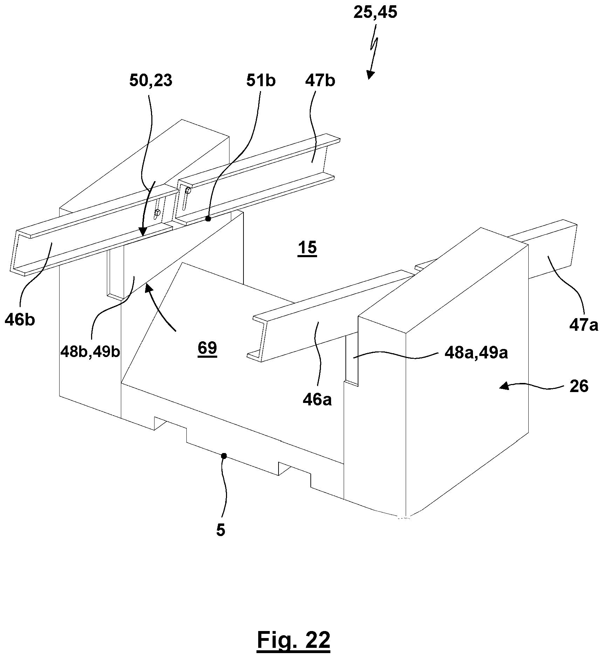

**Fig. 22** zeigt in einer räumlichen Ansicht schräg von oben ein modulares Förderbandstraßen-Aufstandsbetonmodul 45, welches hier als Neigungsmodul 25 ausgebildet ist. An dem Neigungsmodul 25 sind zwei Paare von Förderbandstreben 46, 47 montiert. Für dieses Ausführungsbeispiel verfügt das modulare Förderbandstraßen-Aufstandsbetonmodul 45 zusätzlich zu dem Grundkörper 26 über Befestigungs- und/oder Auflage-Teilmodule 48. Jeweils ein Befestigungs- und/oder Auflage-Teilmodul 48 ist an einem zugeordneten Seitenschenkel 3, 4 auf der Innenseite gehalten und befestigt. Für das dargestellte Ausführungsbeispiel sind die Befestigungs- und/oder Auflage-Teilmodule 48 als Keilkörper 49 ausgebildet mit einem Keilwinkel 50, der dem Neigungswinkel 23 entspricht. Der Keilkörper 49 liegt mit seiner Unterseite auf der Auflagefläche 13 des Grundkörpers 26, die parallel zur Aufstandsfläche 5 orientiert ist, auf. Hingegen bildet die Oberseite des Keilkörpers 49 eine Keilfläche 51, die mit dem Keilwinkel 50 geneigt ist. Auf der Keilfläche 51 liegen die Förderbandstreben 46, 47 unter Abstützung der Last auf. Die Förderbandstreben 46, 47 sind in den Befestigungsbereichen 8, hier mittels Befestigungsschrauben 11, die in die Innengewindeeinsätze 10 eingeschraubt sind, an den Seitenschenkeln 3, 4 des Grundkörpers 26 befestigt.

Für das dargestellte Ausführungsbeispiel sind die Förderbandstreben 46, 47 als U-Profile ausgebildet, die mit ihren Grundschenkeln flächig an dem Befestigungsbereich 8 anliegen, so dass sich die Seitenschenkel der U-Profile von den Seitenschenkeln 3, 4 nach innen erstrecken.

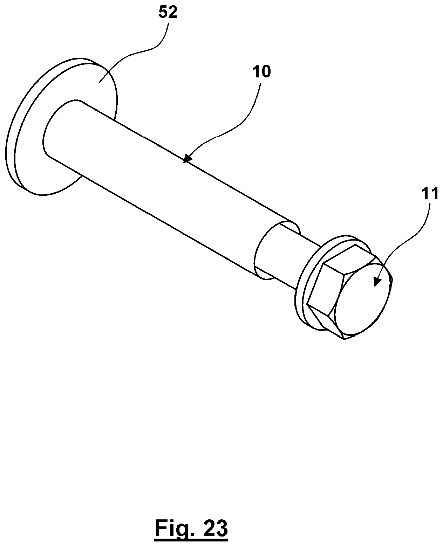

**Fig. 23** zeigt beispielhaft einen Innengewindeeinsatz 10 mit darin eingeschraubter Befestigungsschraube 11. Der Innengewindeeinsatz 10 ist stoffschlüssig in den Grundkörper 26 des Förderbandstraßen-Aufstandsbetonmoduls 1, 27, 45 integriert und vorzugsweise in das Betonmaterial des Grundkörpers 26 eingegossen, wobei sich ein Endbereich des Innengewindeeinsatzes 10 aus der Oberfläche des Grundkörpers 26 heraus erstrecken kann oder dieser bündig mit der Oberfläche des Grundkörpers 26 ist. Der Innengewindeeinsatz 10 verfügt über ein Innengewinde, in welches das Außengewinde der Befestigungsschraube 11 eingeschraubt werden kann. Für das in Fig. 23 dargestellte Ausführungsbeispiel verfügt der Innengewindeeinsatz 10 über eine hier tellerartige Verdickung 52. Im Bereich der Verdickung 52 kann das Innengewinde des Innengewindeeinsatzes 10 endseitig verschlossen sein. Die Verdickung 54 dient der verbesserten Anbindung des Betonmaterials des Grundkörpers 26 und einer Kraftübertragung zwischen dem Innengewindeeinsatz 10 und dem Grundkörper 26 mit einer größeren Übertragungsfläche.

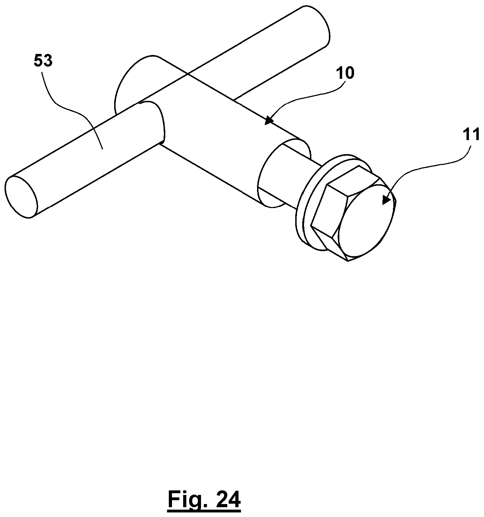

**Fig. 24** zeigt in einer räumlichen Darstellung eine mögliche alternative Ausgestaltung eines Innengewindeeinsatzes 10 mit darin eingeschraubter Befestigungsschraube 11. Hier verfügt der Innengewindeeinsatz 10 über eine Querstrebe 53, die ebenfalls der verbesserten Anbindung des Innengewindeeinsatzes 10 an den Grundkörper 26 dienen soll.

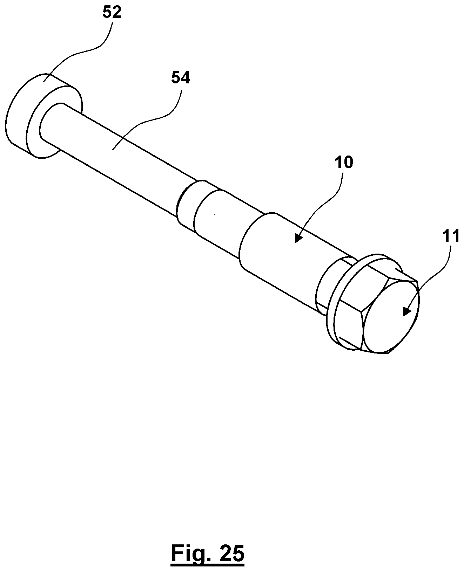

Für das in **Fig. 25** dargestellte Ausführungsbeispiel verfügt der Innengewindeeinsatz 10 über eine strebenartige Verlängerung 54 mit einer endseitigen Verdickung 52. Hier ist der Innengewindeeinsatz 10 über seine Längserstreckung abgestuft ausgebildet. Möglichst hierbei, dass die Verdickung 52 im Inneren des Betonmaterials verankert ist. Möglich ist aber auch, dass die Verlängerung 54 so bemessen ist, dass sich der Innengewindeeinsatz 10 vollständig durch eine Durchgangsbohrung des Grundschenkels 2 oder des Seitenschenkels 3, 4 erstreckt, womit dann die Verdickung 52 auf einer Seite des Grundschenkels 2 oder des Seitenschenkels 3, 4 zur Anlage kommt, während die Innengewindebohrung des Innengewindeeinsatzes 10 von der anderen Seite des Grundschenkels 2 oder des Seitenschenkels 3, 4 zugänglich ist.

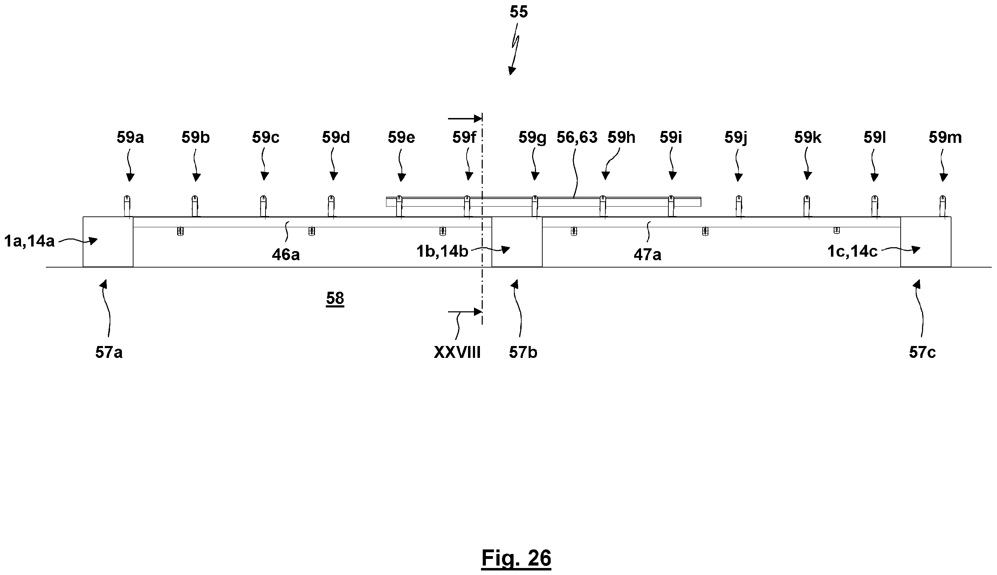

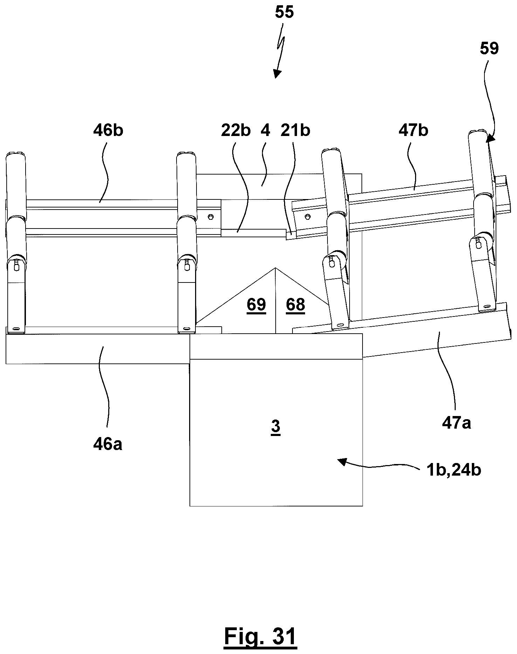

**Fig. 26** zeigt beispielhaft eine Förderbandstraße 55, im Bereich welcher das Förderband 56 (von dem in Fig. 31 lediglich ein Teil des Obertrums dargestellt ist) horizontal verläuft. Die Förderbandstraße 55 verfügt über Tragstützen 57, über die die Förderbandstraße 55 auf dem Boden 58 abgestützt ist, indem die Tragstützen 57 lose auf dem Boden 58 aufstehen. Die Tragstützen 57 sind für dieses Ausführungsbeispiel jeweils von einem Horizontalmodul 14, beispielsweise gemäß dem in Fig. 1 und 2 dargestellten Ausführungsbeispiel, ausgebildet. In den Befestigungsbereichen 8 des in Fig. 31 mittigen Horizontalmoduls 14b sind erste Endbereiche von Förderbandstreben 46, 47 befestigt, wobei diese auf den Förderbandstreben-Auflagebereichen 9 aufliegen können. Die anderen Endbereiche der Förderbandstreben 46, 47 sind in entsprechender Weise an benachbarten Horizontalmodulen 14a, 14c befestigt. An den Förderbandstreben 46, 47 sind Förderrollenmodule 59 gehalten, auf welchen wiederum das Förderband aufliegt und das Förderband für die Förderbewegung rollend geführt ist.

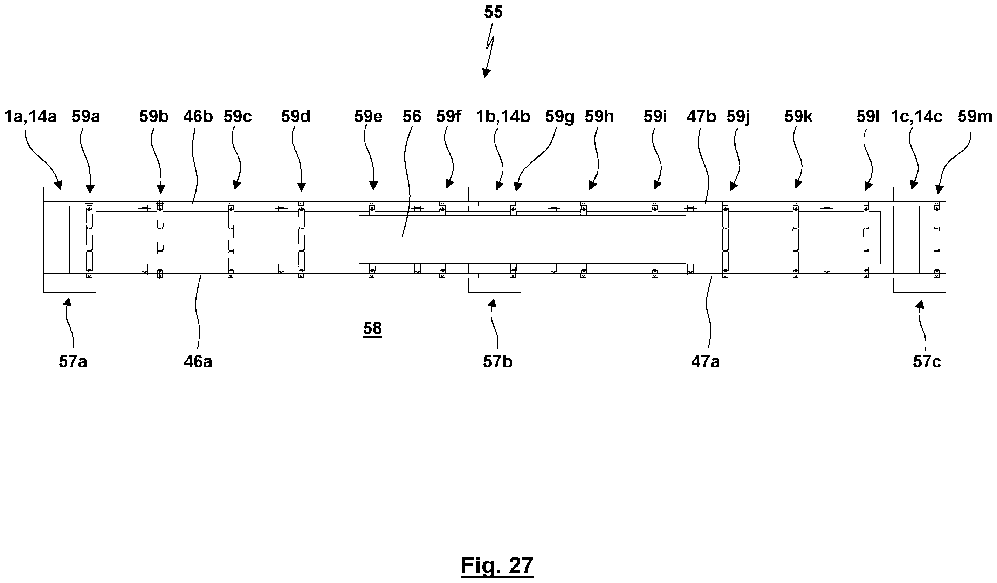

**Fig. 27** zeigt die Förderbandstraße 55 gemäß Fig. 26 in einer Draufsicht.

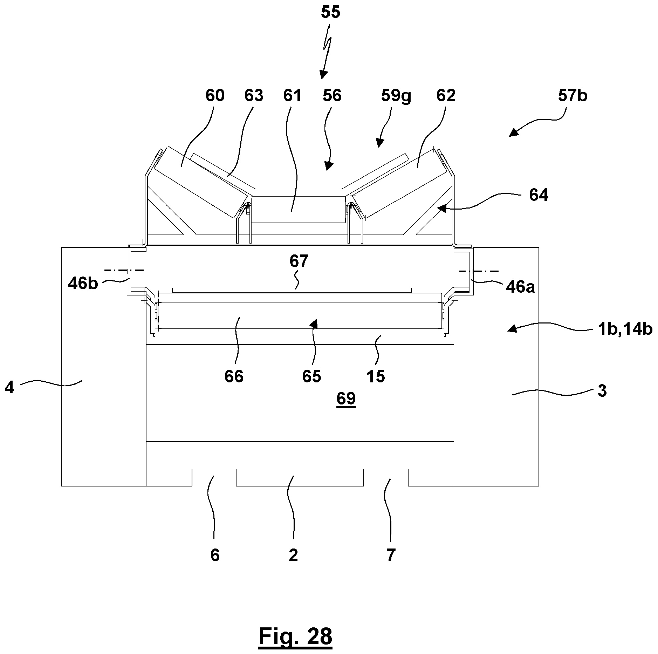

**Fig. 28** zeigt einen Schnitt XXVIII durch die Förderbandstraße 55 gemäß Fig. 26 im Bereich der Tragsäule 57b. Zu erkennen ist hier die Befestigung der Förderbandstreben 46 an den Seitenschenkeln 3, 4. Wiederum an den Förderbandstreben befestigt ist ein oberes Förderrollenmodul 59g, welches drei relativ zueinander geneigte Förderrollen 60, 61 ,62 aufweist. Der auf den Förderrollen 60, 61, 62 aufliegende Obertrum 63 des Förderbands 56 wird infolge der Neigung der Förderrollen 60, 61, 62 relativ zueinander in einen wannenförmigen Querschnitt gebracht. Die Förderrollen 60, 61, 62 sind gegenüber einer Haltekonstruktion 64 drehbar gelagert und von dieser gehalten. Die Haltekonstruktion 64 ist wiederum an den Förderbandstreben 46, 47 befestigt. An den Förderbandstreben 46, 47 ist des Weiteren auch ein unteres Förderrollenmodul 65 gehalten mit einer Förderrolle 66, auf deren Oberseite ein Untertrum 67 des Förderbands 56 aufliegen und geführt werden kann. Die Förderbandstreben 46, 47 und das untere Förderrollenmodul 65 sind in dem Aufnahmeraum 15 angeordnet. Möglich ist, dass die beiden Förderrollenmodule 59, 65 separat voneinander ausgebildet und an den Förderbandstreben 46, 47 gehalten sind oder auch ein gemeinsames Modul bilden.

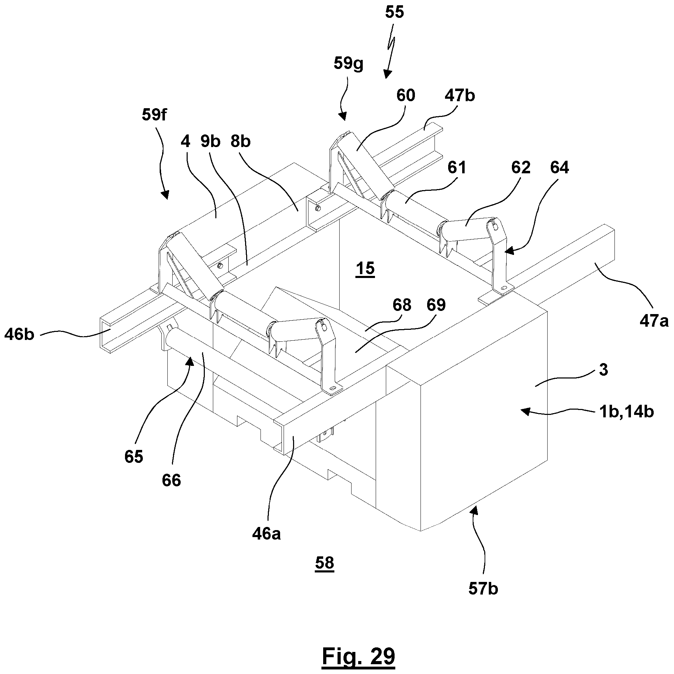

**Fig. 29** zeigt einen Ausschnitt aus der Förderbandstraße 55 gemäß Fig. 26 bis 28 im Bereich der Tragstütze 57b in einer räumlichen Ansicht schräg von oben ohne Darstellung des Förderbands 56.

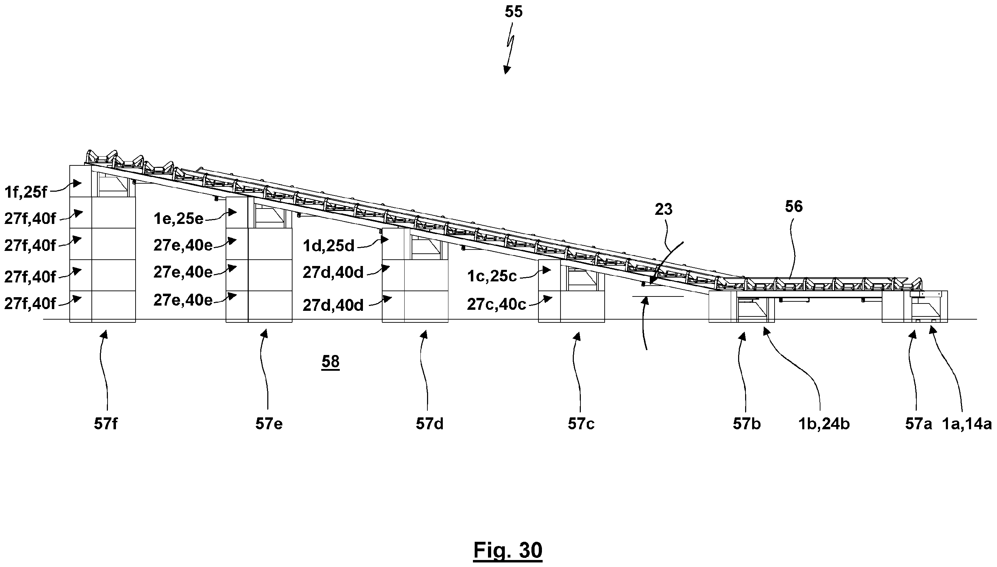

**Fig. 30** zeigt eine andere Ausgestaltung einer Förderbandstraße 55 in einer horizontalen Ansicht schräg von vorne. Die Förderbandstraße 55 verfügt in diesem Fall (in dem dargestellten Ausschnitt) über Tragstützen 57a bis 57f. Hierbei verläuft das Förderband 56 zwischen den Tragstützen 57a und 57b horizontal, während dieses zwischen den Tragstützen 57b bis 57f mit dem Neigungswinkel 23 je nach Förderrichtung ansteigt oder abfällt. Im Bereich der Tragstütze 57a findet ein Horizontalmodul 14 Einsatz, wie dieses beispielsweise in Fig. 1 und 2 dargestellt ist. Da im Bereich der Tragstütze 57b der Wechsel von der horizontalen Bewegung des Förderbands 56 zu einer Bewegung desselben unter dem Neigungswinkel 23 erfolgt, findet im Bereich der Tragstütze 57 ein Übergangsmodul 24 Einsatz, wie dieses beispielsweise in Fig. 9 dargestellt ist. Hingegen finden im Bereich der Tragstützen 57c bis 57f Neigungsmodule 25, beispielsweise gemäß Fig. 7, Einsatz. Da allerdings die Höhen der Tragstützen 57c bis 57f unterschiedlich sind, sind in den Tragstützen 57c bis 57f die Neigungsmodule 25 über eine ansteigende Anzahl von Zwischenmodulen 40 mit quaderförmigen Grundkörper 26, ggf. mit Formschlusselementen 28, 29 oder 16, 39 an dem Boden 58 abgestützt.

**Fig. 31** zeigt in einer räumlichen Ansicht schräg von oben die Förderbandstraße 55 gemäß Fig. 30 im Bereich der Tragstütze 57b und des Übergangsmoduls 24b.

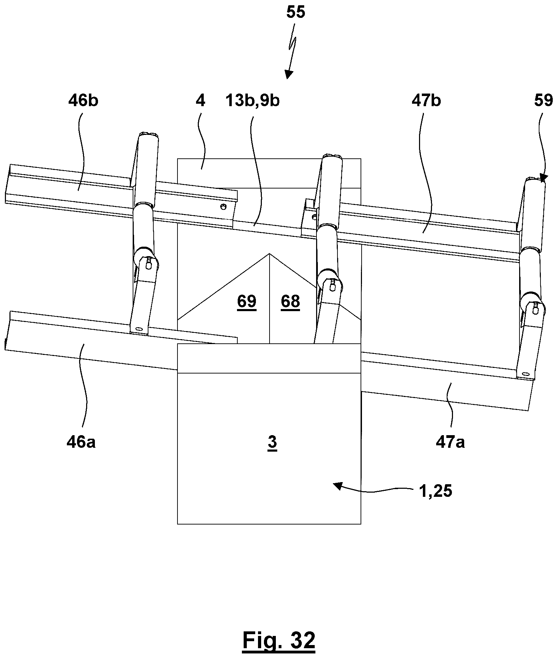

**Fig. 32** zeigt die Förderbandstraße 55 gemäß Fig. 30 in einem Teilausschnitt im Bereich der Befestigung der Förderbandstreben 46, 47 an dem Neigungsmodul 25.

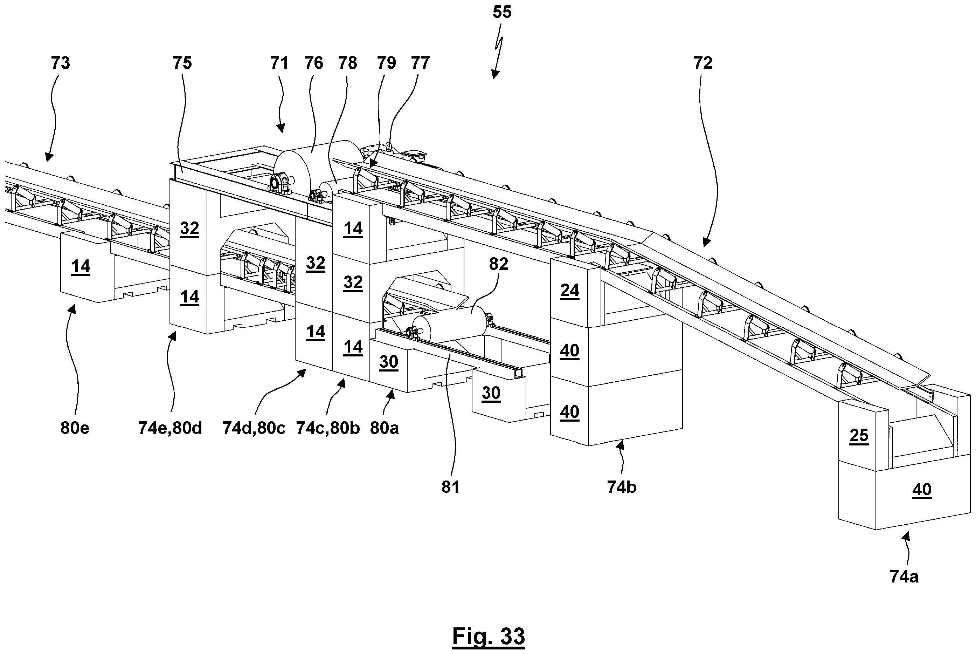

**Fig. 33** zeigt eine Förderbahnstraße 55 in einem Übergabebereich 71. In dem Übergabebereich 71 erfolgt eine Übergabe des Förderguts von einem ersten Förderband 72 zu einem zweiten Förderband 73. Für das dargestellte Ausführungsbeispiel erfolgt die Übergabe in dem Übergabebereich 71 dadurch, dass das Fördergut von dem höheren Förderband 72 auf das darunter angeordnete Förderband 73 fällt. Für das dargestellte Ausführungsbeispiel sind die Förderbänder 72, 73 in einer Draufsicht koaxial zueinander orientiert.

Das Förderband 72 ist in dem dargestellten Ausschnitt mittels Tragstützen 74a bis 74e abgestützt.

Die Tragstütze 74a weist ein Zwischenmodul 40 und ein darauf aufstehendes Neigungsmodul 25 auf.

Die Tragstütze 74b weist zwei aufeinander gestapelte Zwischenmodule 40 und ein darauf angeordnetes Übergangsmodul 24 auf. Im Bereich des Übergangsmoduls 24 erfolgt eine Veränderung der Förderung des Förderguts von einer geneigten Förderung nach oben in eine Förderung in horizontaler Richtung.

Die Tragstütze 74c weist ein Horizontalmodul 14, ein Brückenmodul 32 gemäß Fig. 15 und ein Horizontalmodul 14 auf, die in der genannten Reihenfolge aufeinander gestapelt sind. Wie in Fig. 33 zu erkennen ist, erstreckt sich das Förderband 73 durch den Aufnahmeraum 35 des Brückenmoduls 32 hindurch. Die Horizontalmodule 14 können dabei gemäß Fig. 1 ausgebildet sein, wobei aber die Horizontalmodule 14 auch lediglich eine einzige Schrägfläche aufweisen können. An dem unteren Horizontalmodul 14 ist das untere Förderband 73 gehalten, während an dem oberen Horizontalmodul 14 das obere Förderband 72 gehalten ist.

Die Tragstützen 74d, 74e verfügen jeweils über ein Horizontalmodul 14, an dem das untere Förderband 73 gehalten ist. Auf dem Horizontalmodul 14 steht ein H-förmiges Brückenmodul 32 gemäß Fig. 12 auf. Das untere Förderband 73 erstreckt sich durch den Aufnahmeraum 35 des Brückenmoduls 32hindurch.

An den Befestigungsbereichen 36 der Brückenmodule 32 ist ein Antriebsrahmen 75 befestigt. An dem Antriebsrahmen 75 ist wie dargestellt eine Antriebsrolle 76, die von einem Antriebsmotor 77 (direkt oder unter Zwischenschaltung eines Getriebes) angetrieben ist, gelagert. Darüber hinaus ist an dem Antriebsrahmen 75 eine Antriebs-Umlenkrolle 78 drehbar gelagert. Hierbei ist die höchste Stelle der Mantelfläche der Antriebsrolle 76 in der Höhe des Obertrums des Förderbandes 72 angeordnet. Der Obertrum wird auf dem Weg von dem letzten Förderrollenmodul 79 des oberen Förderbandes aus der Wannenform im Bereich des letzten Förderrollenmoduls 79 zu der flächigen Anlage an die Antriebsrolle 76 abgeflacht.

Die Antriebs-Umlenkrolle 78 (die auch als sogenannte "Drucktrommel" ausgebildet sein kann) verfügt über einen kleineren Durchmesser als die Antriebsrolle 76. Die höchste Stelle der Mantelfläche der Antriebs-Umlenkrolle 78 ist in der Höhe des Untertrums des Förderbandes 72 angeordnet, sodass der Untertrum von der Antriebs-Umlenkrolle 78 horizontal in das Förderrollenmodul für den Untertrum einlaufen kann. Der Umschlingungswinkel der Antriebsrolle 76 liegt zwischen 180° und 270°, wobei dieser von den Durchmessern der Antriebsrolle 76 und der Antriebs-Umlenkrolle 78 und dem Abstand derselben abhängig ist. Hingegen ist der Umschlingungswinkel der Antriebs-Umlenkrolle 78 (geringfügig) kleiner als 90°.

Das untere Förderband 73 ist in dem dargestellten Ausschnitt mittels Tragstützen 80a bis 80e gehalten, wobei die Tragstützen 80b bis 80d den Tragstützen 74c bis 74f entsprechen, die damit multifunktional sind, indem diese einerseits das untere Förderband 73 und andererseits das obere Förderband 72 tragen.

Die Tragstütze 80a ist als Umlenkrollenmodul 30 ausgebildet, wie dieses beispielsweise in Fig. 10 dargestellt ist. Das Umlenkrollenmodul 30 verfügt aber abweichend zu Fig. 10 im Bereich der oberen Stirnseiten der Seitenschenkel 3, 4 über Befestigungsbereiche 36, im Bereich welcher an dem Umlenkrollenmodul 30 (hier unter Zwischenordnung einer Tragstrebe 81) eine Umlenkrolle 82 drehbar gelagert ist. Im Bereich der Umlenkrolle 82 erfolgt die Umlenkung des unteren Förderbandes 73 für den Übergang vom Obertrum zum Untertrum. Die Umlenkrolle 82 erstreckt sich dabei in dem Aufnahmeraum 15 des Umlenkrollenmoduls 30. Für das dargestellte Ausführungsbeispiel sind die auf beiden Seiten angeordneten Tragstreben 81 zusätzlich an einem weiteren Umlenkrollenmodul 30 abgestützt, ohne dass dies zwingend der Fall ist.

Das Fördergut fällt im Bereich der Antriebsrolle 76 von dem oberen Förderband 72 herunter und wird von dem unteren Förderband 73 aufgenommen und weiter transportiert.

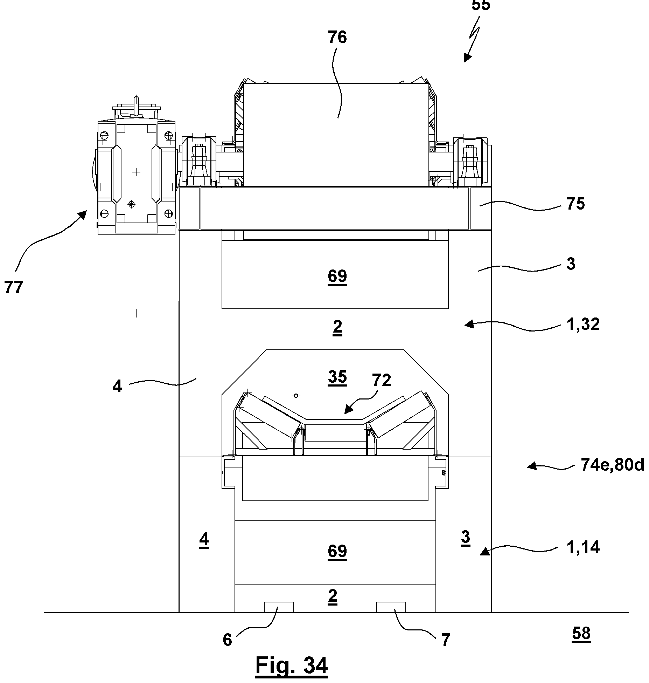

**Fig. 34** zeigt die Förderbandstraße 55 gemäß Fig. 33 bei Blickrichtung entgegen der Förderrichtung in einem Bereich vor der Tragsäule 74d, 80d.

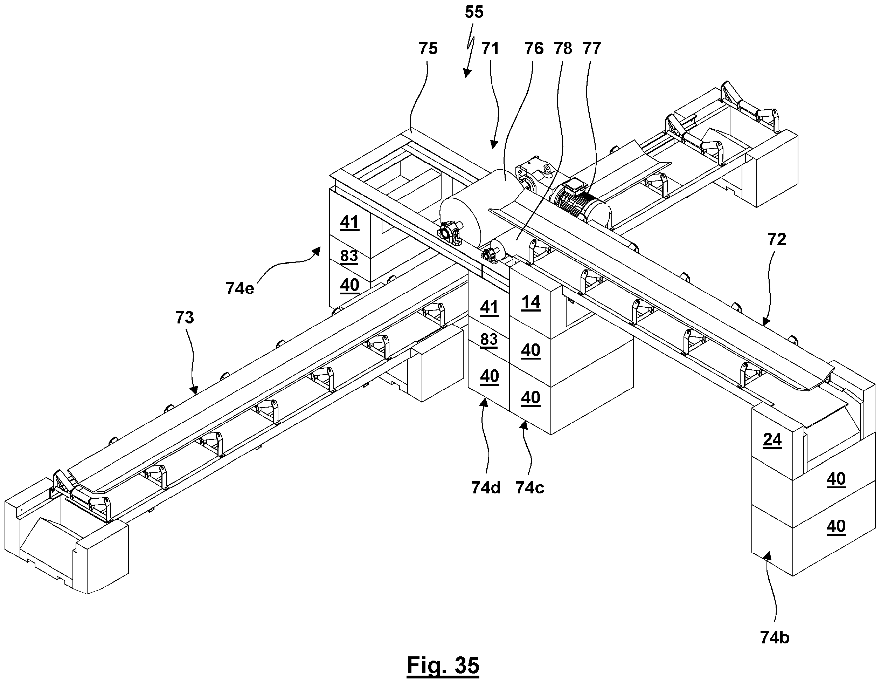

**Fig. 35** zeigt in einer räumlichen Ansicht einen Ausschnitt aus einer anderen Ausgestaltung einer Förderbandstraße 55. Hier kreuzen sich ein oberes Förderband 72 und ein unteres Förderband 73 in dem Übergabebereich 71, wobei der Kreuzungswinkel 90° beträgt. Das obere Förderband 72 kann dabei mit Tragsäulen 74b,74c, 74d, 74e entsprechend dem Ausführungsbeispiel gemäß Fig. 33 ausgebildet sein. Da hier aber keine Aufnahmeräume 35 von Brückenmodulen 32 für den Hindurchtritt des unteren Förderbandes 73 erforderlich sind, sind bei der Tragsäule 74c das Horizontalmodul 14 und das Brückenmodul 32 durch Zwischenmodule 40 ersetzt. Auch bei den Tragsäulen 74d, 74e ist das Horizontalmodul 14 durch Zwischenmodule 40 ersetzt. Des Weiteren ist bei den Tragsäulen 74d, 74e das H-förmige Brückenmodul 32 ersetzt durch ein Zwischenmodul 83 halber Höhe und ein Antriebsmodul 41, wie dies in Fig. 20 dargestellt ist. Mit den Befestigungsbereichen 36 des Antriebsmoduls 41 ist dann der Antriebsrahmen 75 verschraubt.

Durch den Freiraum, der sich in horizontaler Richtung zwischen den Tragsäule 74d, 74e ergibt und der nach oben durch den Antriebsrahmen 75 begrenzt ist, erstreckt sich das untere Förderband 73. Das untere Förderband 73 ist über mehrere Tagsäulen, die in dem dargestellten Ausschnitt aus Horizontalmodulen 14 bestehen, abgestützt.

Wie in den Fig. 33 bis 35 zu erkennen ist, können die kubisch ausgebildeten Zwischenmodule 40 auch unmittelbar auf dem Boden 58 aufstehen, sodass diese auch ein Untermodul bilden können. In diesem Fall können die Zwischenmodule 40 auch ohne im Bereich der Unterseite ausgebildete Formschlusselemente ausgebildet sein.

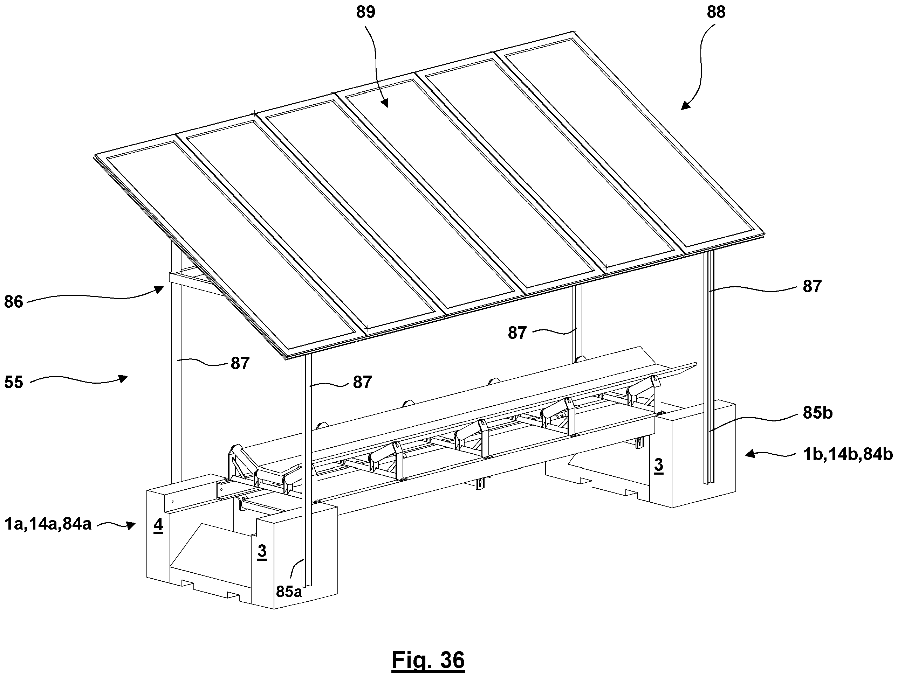

Fig. 36 zeigt einen Ausschnitt einer Förderbandstraße 55 mit zwei Förderbandstraßen-Aufstandsbetonmodulen 1, die beispielsweise als Horizontalmodul 14 ausgebildet sind. In diesem Fall sind die Förderbandstraßen-Aufstandsbetonmodule 1 multifunktional ausgebildet, indem diese auch als Solarmodule 84 dienen. Die Solarmodule 84 verfügen dabei im Bereich der Außenseiten der Seitenschenkel 3, 4 über Befestigungsbereiche 85. An den Befestigungsbereichen 85 ist eine Tragstruktur 86, hier ein Vertikalträger 87 der Tragstruktur 86 (der für das dargestellte Ausführungsbeispiel als U-Profil ausgebildet ist), befestigt und gehalten. Die Tragstruktur 86 ist Bestandteil einer Solaranlage 88 und dient der Abstützung eines Solarpaneels 89. Hierbei erstrecken sich die Tragstruktur 86 und das Solarpaneel 89 oberhalb der Förderbandstraße 55. Weitere Bauelemente der Solaranlage 88 wie elektrische Leitungen, Steuerelemente, Gleichrichter, Akkumulatoren u. ä. können an dem Solarmodul 84 oder der Tragstruktur 86 gehalten sein oder diese können sogar in das Solarmodul 84 integriert sein. Möglich ist, dass mittels der Solaranlage 88 gewonnene Energie zum Betrieb der Förderbandstraße 55, beispielsweise für eine zumindest teilweise Leistungsversorgung des elektrischen Antriebsmotors 77, genutzt wird, die gewonnene Energie gespeichert wird und/oder die gewonnene Energie abgeführt und anderweitig genutzt wird.

Möglich ist, dass das Förderbandstraßen-Aufstandsbetonmodul 1 aus oder mit einem Recyclingbeton hergestellt ist.

### BEZUGSZEICHENLISTE

- 1: Förderbandstraßen-Aufstandsbetonmodul
- 2: Grundschenkel
- 3: Seitenschenkel
- 4: Seitenschenkel
- 5: Aufstandsfläche
- 6: Ausnehmung
- 7: Ausnehmung
- 8: Befestigungsbereich
- 9: Förderbandstreben-Auflagebereich
- 10: Innengewindeeinsatz
- 11: Befestigungsschraube
- 12: Stufe, Absatz
- 13: Auflagefläche
- 14: Horizontalmodul
- 15: Aufnahmeraum
- 16: Formschlusselement
- 17: Vertiefung
- 18: Außengewindeeinsatz
- 19: Stirnseite
- 20: Formschlusselement
- 21: Auflageflächen-Teilbereich
- 22: Auflageflächen-Teilbereich
- 23: Neigungswinkel
- 24: Übergangsmodul
- 25: Neigungsmodul
- 26: Grundkörper
- 27: Förderbandstraßen-Aufstandsbetonmodul
- 28: Formschlusselement
- 29: Formschlusselemente
- 30: Umlenkrollenmodul
- 31: Schrägfläche
- 32: Brückenmodul
- 33: Teilaufnahmeraum
- 34: Abflachung
- 35: Aufnahmeraum
- 36: Befestigungsbereich
- 37: Formschlusselemente
- 38: Vertiefung
- 39: Formschlusselement
- 40: Zwischenmodul
- 41: Antriebsmodul
- 42: Abflachung
- 43: Abschrägung
- 44: Abschrägung
- 45: modulares Förderbandstraßen-Aufstandsbetonmodul
- 46: Förderbandstrebe
- 47: Förderbandstrebe
- 48: Befestigungs- und/oder Auflage-Teilmodul
- 49: Keilkörper
- 50: Keilwinkel
- 51: Keilfläche
- 52: Verdickung
- 53: Querstrebe
- 54: Verlängerung
- 55: Förderbandstraße
- 56: Förderband
- 57: Tragstütze
- 58: Boden
- 59: Förderrollenmodul
- 60: Förderrolle
- 61: Förderrolle
- 62: Förderrolle
- 63: Obertrum
- 64: Haltekonstruktion
- 65: Förderrollenmodul
- 66: Förderrolle
- 67: Untertrum
- 68: Schrägfläche
- 69: Schrägfläche
- 70: Längserstreckung
- 71: Übergabebereich
- 72: Förderband
- 73: Förderband
- 74: Tragstütze
- 75: Antriebsrahmen
- 76: Antriebsrolle
- 77: Antriebsmotor
- 78: Antriebs-Umlenkrolle
- 79: Fördererrollenmodul
- 80: Tragstütze
- 81: Tragstrebe
- 82: Umlenkrolle
- 83: Zwischenmodul
- 84: Solarmodul
- 85: Befestigungsbereich
- 86: Tragstruktur
- 87: Vertikalträger
- 88: Solaranlage
- 89: Solarpaneel

## Patentansprüche

1. Förderbandstraße (55) mit mehreren lose auf dem Boden (58) und/oder aufeinander stehenden gleichen oder unterschiedlichen Förderbandstraßen-Aufstandsbetonmodulen (1) **dadurch gekennzeichnet, dass** mindestens ein Förderbandstraßen-Aufstandsbetonmodul (1) einen Grundkörper (26) aufweist, der U-förmig oder H-förmig ist mit einem Grundschenkel (2) und zwei Seitenschenkeln (3, 4), wobei die Seitenschenkel (3, 4) im Bereich der einander zugewandten Innenseiten einen Befestigungsbereich (8) zur Befestigung einer sich parallel zu einem Förderband erstreckenden und die Förderrollen haltenden Förderbandstrebe (46, 47) aufweisen, wobei vorzugsweise der Grundschenkel (2) und/oder mindestens ein Seitenschenkel auch einen Förderbandstreben-Auflagebereich (9) aufweist.

2. Förderbandstraße (55) nach Anspruch 1, **dadurch gekennzeichnet, dass** Förderbandstraßen-Aufstandsbetonmodule (1) Tragstützen (57) ausbilden, die über an den Förderbandstraßen-Aufstandsbetonmodulen (1) befestigte Förderbandstreben (46, 47) miteinander verbunden sind.

3. Förderbandstraße (55) nach Anspruch 2, **dadurch gekennzeichnet, dass**
a) eine Tragstütze (74) ein erstes Förderband (72) in einer ersten Höhe trägt,
b) eine Tragstütze (80) ein zweites Förderband (73) in einer zweiten Höhe trägt, wobei die zweite Höhe kleiner ist als die erste Höhe,
c) in einem Übergabebereich (71) das erste Förderband (72) über eine Antriebsrolle (76) und/oder eine Umlenkrolle (82) umgelenkt wird und
d) unter der Antriebsrolle (76) oder Umlenkrolle (82) das zweite Förderband (73) angeordnet ist.

4. Förderbandstraße (55) nach einem der vorhergehenden Ansprüche, **dadurch gekennzeichnet, dass** der Grundschenkel (2)
a) eine Aufstandsfläche (5) ausbildet und/oder
b) mindestens ein Formschlusselement (16) aufweist und/oder
c) zwei Ausnehmungen (6, 7) aufweist, deren Abstand und Querschnitte für das Einführen von Zinken eines Gabelstaplers dimensioniert sind und/oder
d) eine Oberseite mit einer gegenüber der Horizontalen oder Aufstandsfläche (5) geneigten Schrägfläche (31) aufweist und/oder
e) eine Oberseite mit zwei giebelartig in entgegengesetzte Richtungen gegenüber der Horizontalen oder Aufstandsfläche (5) geneigte Schrägflächen (68, 69) aufweist.

5. Förderbandstraße (55) nach einem der vorhergehenden Ansprüche, **dadurch gekennzeichnet, dass** der Befestigungsbereich (8)
a) ein in den Beton des Grundkörpers eingegossenes oder dübelartig in einer Bohrung oder einer Ausnehmung aufgenommenes Befestigungselement und/oder
b) einen in den Beton des Grundkörpers eingegossenen oder dübelartig in einer Bohrung oder einer Ausnehmung aufgenommenen Innengewindeeinsatz (10) und/oder
c) einen in den Beton des Grundkörpers eingegossenen oder dübelartig in einer Bohrung oder einer Ausnehmung aufgenommenen Außengewindeeinsatz
aufweist.

6. Förderbandstraße (55) nach einem der Ansprüche 1 bis 4, **dadurch gekennzeichnet, dass**
a) der Befestigungsbereich (8) des Seitenschenkels (3, 4) eine Befestigung einer Förderbandstrebe (46, 47) unter einem Neigungswinkel (23) gegenüber der Horizontalen oder Aufstandsfläche (5) ermöglicht und/oder
b) der Befestigungsbereich (8) des Seitenschenkels (3, 4) eine Befestigung einer Förderbandstrebe (46, 47) für unterschiedliche Neigungswinkel gegenüber der Horizontalen oder Aufstandsfläche (5) ermöglicht und/oder
c) der Förderbandstreben-Auflagebereich (9) zumindest teilweise geneigt ist.

7. Förderbandstraße (55) nach einem der vorhergehenden Ansprüche, **dadurch gekennzeichnet, dass** das Förderbandstraßen-Aufstandsbetonmodul (1) modular ausgebildet ist mit
a) dem Grundkörper (26) und
b) mindestens einem an dem Grundkörper (26) befestigten oder auf diesem aufliegenden Befestigungs- und/oder Auflage-Teilmodul (48).

8. Förderbandstraße (55) nach Anspruch 7, **dadurch gekennzeichnet, dass** eine Förderbandstrebe (46, 47) über das Befestigungs- und/oder Auflage-Teilmodul (48) an dem Grundkörper (26) abgestützt oder befestigt werden kann, wobei insbesondere das Befestigungs-und/oder Auflage-Teilmodul (48) eine Keilfläche (51) aufweist, deren Keilwinkel (50) einen Neigungswinkel (23) einer an dem Förderbandstraßen-Aufstandsbetonmodul (1) befestigbaren Förderbandstrebe (46, 47) vorgibt.

9. Förderbandstraße (55) nach einem der vorhergehenden Ansprüche mit einem Set von Förderbandstraßen-Aufstandsbetonmodulen (1) mit
a) mindestens einem als Horizontalmodul (14) ausgebildeten Förderbandstraßen-Aufstandsbetonmodul (1), wobei an dem Horizontalmodul (14) Förderbandstreben (46, 47) bei Ausrichtung parallel zur Horizontalen oder zur Aufstandsfläche (5) befestigt werden können, und/oder
b) mindestens einem als Übergangsmodul (24) ausgebildeten Förderbandstraßen-Aufstandsbetonmodul (24), wobei an dem Übergangsmodul (24) eine Förderbandstrebe (46) bei Ausrichtung parallel zur Horizontalen oder zur Aufstandsfläche (5) befestigt werden kann und eine Förderbandstrebe (47) unter einem Neigungswinkel (23) gegenüber der Horizontalen oder der Aufstandsfläche (5) befestigt werden kann, und/oder
c) mindestens einem als Neigungsmodul (25) ausgebildeten Förderbandstraßen-Aufstandsbetonmodul (1), wobei an dem Neigungsmodul (25) Förderbandstreben (46) mit demselben Neigungswinkel (23) gegenüber der Horizontalen oder der Aufstandsfläche (5) befestigt werden können, und/oder
d) mindestens einem als Antriebsmodul (41) ausgebildeten Förderbandstraßen-Aufstandsbetonmodul (1), wobei an dem Antriebsmodul (41) ein Antriebsmotor (77) für ein Förderband (56) befestigt werden kann, und/oder
e) mindestens einem als Umlenkrollenmodul (30) ausgebildeten Förderbandstraßen-Aufstandsbetonmodul (1), wobei an dem Umlenkrollenmodul (30) eine Umlenkrolle (78) befestigt werden kann, und/oder
f) mindestens einem Brückenmodul (32) und/oder
g) mindestens einem modularen Förderbandstraßen-Aufstandsbetonmodul (45) und/oder
h) mindestens einem als Solarmodul (84) ausgebildeten Förderbandstraßen-Aufstandsbetonmodul (1).

## Claims

1. Conveyor belt system (55) comprising a plurality of identical or different conveyor belt system standing concrete modules (1) standing loosely on the ground (58) and/or standing on each other, **characterised in that** at least one conveyor belt system standing concrete module (1) comprises a base body (26) having an U-shape or H-shape with a base leg (2) and two side legs (3, 4), the side legs (3, 4) comprising a mounting region (8) in the region of inner sides facing towards each other for mounting a belt conveyor strut (46, 47) extending parallel to the conveyor belt and holding conveying rollers, wherein preferably the base leg (2) and/or at least one side leg also comprise a belt conveyor strut contact region (9).

2. Conveyor belt system (55) of claim 1, **characterised in that** conveyor belt system standing concrete modules (1) provide supporting pillars (57) which are connected to each other by belt conveyor struts (46, 47) mounted to the conveyor belt system standing concrete modules (1).

3. Conveyor belt system (55) of claim 2, **characterised in that**
a) one supporting pillar (74) supports a first conveyor belt (72) in a first height,
b) one supporting pillar (80) supports a second conveyor belt (73) in a second height, the second height being smaller than the first height,
c) the first conveyor belt (72) is redirected in a transition region (71) by a driving roller (76) and/or a redirecting roller (82) and
d) the second conveyor belt (73) is arranged below the driving roller (76) or redirecting roller (82).

4. Conveyor belt system (55) of one of the preceding claims, **characterised in that** the base leg (2)
a) provides a contact area and/or
b) comprises at least one positive engagement element (16) and/or
c) comprises two recesses (6, 7) having a distance and cross-sections dimensioned for prongs of a fork truck and/or
d) comprises an upper side having a slanted surface (31) being inclined relative to the horizontal plane or contact area (5) and/or
e) comprises an upper surface with two gabled slanted surfaces (68, 69) being inclined in opposite directions relative to the horizontal plane or contact area (5).

5. Conveyor belt system (55) of one of the preceding claims, **characterised in that** the mounting region (8) comprises
a) a mounting element which is cast into the concrete of the base body or accommodated in a bore or recess similar to a dowel and/or
b) an insert (10) comprising an inner thread which is cast into the concrete of the base body or accommodated in a bore or recess similar to a dowel and/or
c) an insert comprising an outer thread being cast into the concrete of the base body or being accommodated in a bore or a recess similar to a dowel.

6. Conveyor belt system (55) of one of claims 1 to 4, **characterised in that**
a) the mounting region (8) of the side legs (3, 4) allows a mounting of a belt conveyor strut (46, 47) under an inclination angle (23) relative to the horizontal plane or contact area (5) and/or
b) the mounting region (8) of the side leg (3, 4) allows a mounting of a conveyor belt strut (46, 47) for different inclination angles relative to the horizontal plane or contact area (5) and/or
c) the belt conveyor strut contact region (9) is at least partially inclined.

7. Conveyor belt system (55) of one of the preceding claims, **characterised in that** the conveyor belt system standing concrete module (1) is modular comprising
a) the base body (26) and
b) at least one mounting and/or contact module part (48) mounted to the base body (26) or resting on the same.

8. Conveyor belt system (55) of claim 7, **characterised in that** one belt conveyor strut (46, 47) is supported or mounted via the mounting and/or contact module part (48) to the base body (26), wherein preferably the mounting and/or supporting module part (48) comprises a wedge surface (51) having a wedge angle (50) which defines an inclination angle (23) of a belt conveyor strut (46, 47) mounted to the conveyor belt system standing concrete module (1).

9. Conveyor belt system (55) of one of the preceding claims comprising a set of conveyor belt system standing concrete modules (1) with
a) at least one of conveyor belt system standing concrete module (1) embodied as a horizontal module (14), wherein belt conveyor struts (46, 47) can be mounted to the horizontal module (14) in an orientation parallel to the horizontal plane or to the contact area (5) and/or
b) at least one conveyor belt system standing concrete module (24) embodied as a transition module (24), wherein a belt conveyor strut (46) can be mounted to the transition module (24) in an orientation parallel to the horizontal plane and to the contact area (5) and a belt conveyor strut (47) can be mounted to the transition module (24) under an inclination angle (23) relative to the horizontal plane and the contact area (5) and/or
c) at least one conveyor belt system standing concrete module (1) embodied as an inclination module (25), wherein belt conveyor struts (46) can be mounted to the inclination module (25) with the same inclination angles (23) relative to the horizontal plane and to the contact area (5) and/or
d) at least one conveyor belt system standing concrete module (1) embodied as a driving module (41), wherein a driving motor (77) for driving the conveyor belt (56) can be mounted to the driving module (41) and/or
e) at least one conveyor belt system standing concrete module (1) iembodied as a redirecting roller module (30), wherein a redirecting roller (78) can be mounted to the redirecting roller module (30) and/or
f) at least one bridge module (32) and/or
g) at least one modular conveyor belt system standing concrete module (45) and/or
h) at least one conveyor belt system standing concrete module (1) embodied as a solar module (84).

## Revendications

1. Convoyeur à bande (55) avec plusieurs modules de béton d'implantation pour bandes transporteuses (1) identiques ou différents, posés librement sur le sol (58) et/ou superposés, **caractérisé en ce qu'**au moins un module de béton d'implantation pour convoyeur à bande (1) comprend un corps de base (26) qui présente une forme de U ou de H, avec une branche de base (2) et deux branches latérales (3, 4), dans lequel les branches latérales (3, 4) comprennent, au niveau des faces internes orientées l'une vers l'autre, une partie de fixation (8) pour la fixation d'une entretoise de convoyeur à bande (46, 47) s'étendant parallèlement à une bande transporteuse et maintenant les rouleaux de transport, dans lequel, de préférence la branche de base (2) et/ou au moins une branche latérale comprend également une partie d'appui d'entretoise de bande transporteuse (9).

2. Convoyeur à bande (55) selon la revendication 1, **caractérisé en ce que** les modules de béton d'implantation pour convoyeur à bande (1) constituent des appuis de support (57) qui sont reliés entre eux par l'intermédiaire d'entretoises de bandes transporteuses (46, 47) fixées aux modules de béton d'implantation pour convoyeur à bande (1).

3. Convoyeur à bande (55) selon la revendication 2, **caractérisée en ce que**
a) un appui de support (74) supporte une première bande transporteuse (72) à une première hauteur,
b) un appui de support (80) supporte une deuxième bande transporteuse (73) à une deuxième hauteur, dans lequel la deuxième hauteur est inférieure à la première hauteur,
c) dans une zone de transfert (71), la première bande transporteuse (72) est déviée par l'intermédiaire d'un rouleau d'entraînement (76) et/ou d'un rouleau de renvoi (82) et
d) sous le rouleau d'entraînement (76) ou le rouleau de renvoi (82), est disposé la deuxième bande transporteuse (73).

4. Convoyeur à bande (55) selon l'une des revendications précédentes, **caractérisé en ce que** la branche de base (2)
a) comprend une surface d'implantation (5) et/ou
b) au moins un élément à complémentarité de forme (16) et/ou
c) deux évidements (6, 7) dont la distance et les sections transversales sont dimensionnées pour l'introduction de dents d'un chariot élévateur et/ou
d) présente une face supérieure avec une surface oblique (31) inclinée par rapport à l'horizontale ou la surface d'implantation (5) et/ou
e) une face supérieure avec deux surfaces obliques (68, 69) inclinées, à la manière d'un fronton, dans des directions opposées, par rapport à l'horizontale ou à la surface d'implantation (5).

5. Convoyeur à bande (55) selon l'une des revendications précédentes, **caractérisé en ce que** la partie de fixation (8) comprend
a) un élément de fixation coulé dans le béton du corps de base ou logé à la manière d'un goujon dans un perçage ou un évidement et/ou
b) un insert à filetage interne (10) coulé dans le béton du corps de base ou logé à la manière d'un goujon dans un perçage ou un évidement et/ou
c) un insert à filetage externe coulé dans le béton du corps de base ou logé à la manière d'un goujon dans un perçage ou un évidement.

6. Convoyeur à bande (55) selon l'une des revendications 1 à 4, **caractérisé en ce que**
a) la partie de fixation (8) de la branche latérale (3, 4) permet une fixation d'une entretoise de bande transporteuse (46, 47) avec un angle d'inclinaison (23) par rapport à l'horizontale ou à la surface d'implantation (5) et/ou
b) la partie de fixation (8) de la branche latérale (3, 4) permet une fixation d'une entretoise de bande transporteuse (46, 47) pour différents angles d'inclinaison par rapport à l'horizontale ou à la surface d'implantation (5) et/ou
c) la partie d'appui d'entretoise de bande transporteuse (9) est inclinée au moins partiellement.

7. Convoyeur à bande (55) selon l'une des revendications précédentes, **caractérisé en ce que** le module de béton d'implantation pour convoyeur à bande (1) est conçu de manière modulaire avec
a) le corps de base (26) et
b) au moins un module partiel de fixation et/ou d'appui (48) fixé sur le corps de base (26) ou s'appuyant sur celui-ci.

8. Convoyeur à bande (55) selon la revendication 7, **caractérisé en ce qu'**une entretoise de bande transporteuse (46, 47) peut être appuyée ou fixée au corps de base (26) par l'intermédiaire du module partiel de fixation et/ou d'appui (48), dans lequel, plus particulièrement le module partiel de fixation et/ou d'appui (48) présente une surface cunéiforme (51) dont l'angle de coin (50) prédéfinit un angle d'inclinaison (23) d'une entretoise de bande transporteuse (46, 47) pouvant être fixée au module de béton d'implantation pour convoyeur à bande (1).

9. Convoyeur à bande (55) selon l'une des revendications précédentes, avec un ensemble de modules de béton d'implantation pour convoyeur à bande (1) avec
a) au moins un module de béton d'implantation pour convoyeur à bande (1) conçu comme un module horizontal (14), dans lequel, au module horizontal (14), peuvent être fixées des entretoises de bande transporteuse (46, 47) lors d'une orientation parallèle à l'horizontale ou à la surface d'implantation (5) et/ou
b) au moins un module de béton d'implantation pour convoyeur à bande (24) conçu comme un module de transition (24), dans lequel, au module de transition (24), peut être fixée une entretoise de bande transporteuse (46) lors d'une orientation parallèle à l'horizontale ou à la surface d'implantation (5) et une entretoise de bande transporteuse (47) peut être fixé avec un angle d'inclinaison (23) par rapport à l'horizontale ou à la surface d'implantation (5) et/ou
c) au moins un module de béton d'implantation pour convoyeur à bande (1) conçu comme un module d'inclinaison (25), dans lequel, au module d'inclinaison (25), peuvent être fixées des entretoises de bandes transporteuse (46) avec le même angle d'inclinaison (23) par rapport à l'horizontale ou à la surface d'implantation (5) et/ou
d) au moins un module de béton d'implantation pour convoyeur à bande (1) conçu comme un module d'entraînement (41), dans lequel au module d'entraînement (41), peut être fixé un moteur d'entraînement (77) pour une bande transporteuse (56) et/ou
e) au moins un module de béton d'implantation pour convoyeur à bande (1) conçu comme un module de rouleau de renvoi (30), dans lequel, au module de rouleau de renvoi (30), peut être fixé un rouleau de renvoi (78) et/ou
f) au moins un module de pont (32) et/ou
g) au moins un module de béton d'implantation pour convoyeur à bande (45) modulaire et/ou
h) au moins un module de béton d'implantation pour convoyeur à bande (1) conçu comme un module solaire (84).
